(19) Europäisches Patentamt
European Patent Office
Office européen des brevets

(11) EP 2 483 804 B1

(12) **EUROPEAN PATENT SPECIFICATION**

(45) Date of publication and mention of the grant of the patent:
**18.05.2016 Bulletin 2016/20**

(21) Application number: **09736364.2**

(22) Date of filing: **02.10.2009**

(51) Int Cl.:
***G06F 17/30*** *(2006.01)*

(86) International application number:
**PCT/AT2009/000381**

(87) International publication number:
**WO 2011/038427 (07.04.2011 Gazette 2011/14)**

# (54) VISUAL QUERIES IN DATA EXPLORATION

GRAFISCHE ANFRAGEN IN DATENBANKANWENDUNG

REQUÊTES VISUELLES EN EXPLORATION DE DONNÉES

(84) Designated Contracting States:
**AT BE BG CH CY CZ DE DK EE ES FI FR GB GR HR HU IE IS IT LI LT LU LV MC MK MT NL NO PL PT RO SE SI SK SM TR**

(43) Date of publication of application:
**08.08.2012 Bulletin 2012/32**

(73) Proprietor: **VRVis Zentrum für Virtual Reality und Visualisierung Forschungs-GmbH**
**1220 Vienna (AT)**

(72) Inventors:
- **BRUCKNER, Stefan**
  **Vancouver BC V5N 1V9 (CA)**
- **SOLTESZOVA, Veronika**
  **831 01 Bratislava (SK)**
- **BÜHLER, Katja**
  **A-1080 Vienna (AT)**
- **HLADUVKA, Jiri**
  **91101 Trencin (SK)**

(74) Representative: **Sonn & Partner Patentanwälte**
**Riemergasse 14**
**1010 Wien (AT)**

(56) References cited:
**WO-A-98/38561**

- **PAJAROLA R ET AL: "The Alps at your fingertips: virtual reality and geoinformation systems" DATA ENGINEERING, 1998. PROCEEDINGS., 14TH INTERNATIONAL CONFERENCE ON ORLANDO, FL, USA 23-27 FEB. 1998, LOS ALAMITOS, CA, USA,IEEE COMPUT. SOC, US, 23 February 1998 (1998-02-23), pages 550-557, XP010268357 ISBN: 978-0-8186-8289-6**
- **SHAO-SHIN HUNG ET AL: "Hierarchical distance-based clustering for interactive VRML traversal patterns" INFORMATION TECHNOLOGY: RESEARCH AND EDUCATION, 2005. ITRE 2005. 3RD I NTERNATIONAL CONFERENCE ON HSINCHU, TAIWAN JUNE 27-30, 2005, PISCATAWAY, NJ, USA,IEEE, PISCATAWAY, NJ, USA, 27 June 2005 (2005-06-27), pages 485-489, XP010832714 ISBN: 978-0-7803-8932-8**
- **BRUCKNER S ET AL: "BrainGazer -Visual Queries for Neurobiology Research" IEEE TRANSACTIONS ON VISUALIZATION AND COMPUTER GRAPHICS, IEEE SERVICE CENTER, LOS ALAMITOS, CA, US, vol. 15, no. 6, 1 November 2009 (2009-11-01), pages 1497-1504, XP011278784 ISSN: 1077-2626**

Note: Within nine months of the publication of the mention of the grant of the European patent in the European Patent Bulletin, any person may give notice to the European Patent Office of opposition to that patent, in accordance with the Implementing Regulations. Notice of opposition shall not be deemed to have been filed until the opposition fee has been paid. (Art. 99(1) European Patent Convention).

EP 2 483 804 B1

**Description**

The present invention generally relates to a method and a system for carrying out visual queries with respect to volumetric data which are to be visualized together with a data of geometric objects, wherein data are stored in a database and computer means comprising visualization means are provided for visualization of structures and data.

The invention is in particular applicable with respect to the visualization of neurobiological structures, or neuronal data, respectively, or comparable large amounts of (volumetric) data.

A major goal of neuroscientists' work is to explain specific behavior of living beings, especially humans. However, human behavioral traits are complex and difficult to comprehend. For this purpose, researchers explore the anatomy and morphology of neuronal circuits of simpler species to identify their meaning and functionality. The fruit fly *Drosophila melanogaster* is a favorite organism in neurobiology research because it facilitates studies of complex systems on a relatively simple model. For this purpose, large databases of neuronal structures acquired by microscopy scans were built and adapted for computer-aided exploration and visualization, and visualization techniques tailored for exploration of biological structures are used.

However, orientation in large collections of spatial structures still poses a problem. The table-view database interfaces in use, although allowing filtering of items and accessing known subsets of data, do not support guide selection based on spatial relationships. Furthermore, it is not possible at present to calculate and provide specific objects of interest in a short time, bearing in mind that such calculations should be performed as runtime calculations; due to the large amount of data, these runtime calculations with a view to quick visualization are not possible at present.

From PAJAROLA R ET AL: "The Alps at your fingertips: virtual reality and geoinformation systems" DATA ENGINEERING, 1998. PROCEEDINGS., 14TH INTERNATIONAL CONFERENCE ON ORLANDO, FL, USA 23-27 FEB. 1998, LOS ALAMITOS, CA, USA, IEEE COMPUT. SOC, US, 23 February 1998 (1998-02-23), pages 550-557, XP010268357 ISBN: 978-0-8186-8289-6, a desktop virtual reality interface to a geographic information system is known where it is disclosed to integrate a geometric index into a database, and to perform operations as requested in a real-time trip through the virtual world.

In WO 98/38561 A, a method and system for storing and retrieving spartial data objects is described where multi-dimensional objects are stored within a database by determining their position in a multi-tiered coordinate system. To sequence tiles within a coordinate system, the use of Peano Hilbert curves is mentioned.

It is now an object of the invention to provide a method and a system for visual queries which facilitate visual exploration of a large collection of e.g. neuroanatomical structures, and allow rapid calculation of spatial data of structures of interest, for visual exploration and queries.

In particular, it is an object to give access to structures located in the proximity of a sketched path, and this in comparatively short response times.

Furthermore, it is an object to select objects based on their mutual spatial distances.

A further object is to allow fast browsing using semantic relationships stored in the database.

Thus, it is intended to provide rapid runtime calculation to obtain quick visualizations, with response time e.g. in the ms-range.

To solve the given problem, the invention provides a method and a system as defined in the independent claims. Preferred embodiments are subject of the dependent claims.

According to the present invention, a specific data retrieval technique is provided to be able to quickly access and read the wished data from the database associated with a server, this in spite of the large amount of data stored in the database. Accordingly, a technique is proposed to query a - large - database in a visual manner, by direct interaction, with a 2D (slice) or 3D visualization. In connection therewith, in a preprocessing step, for a row of volume elements of a region of interest, a respective distance table is calculated; then, on the basis of said distance table, an associated look-up table is derived which can be handled in a memory with limited capacity, in a runtime memory, and which nevertheless allow rapid access to data by looking into this look-up tables and, thereafter, into the corresponding distance table. The look-up table contains a count of pairs of structure distance values and structure IDs as contained in the distance tables, as well as an offset of the row in the distance table; according to this, the look-up table contains less amount of data which, nevertheless, allow to read out respective pairs in the distance table, so that it is then possible to finally read out the structure data from the database, this all in a very short time.

Preferably, the calculation of the distance table is performed on the basis of a 3D Hilbert scan, to obtain neighbourhood-preserving storage patterns of rows. It should be mentioned here that Hilbert scans, whether in 2D or 3D, are known per se.

Preferably, the distances between the structures and the respective volume elements are limited to a maximum distance value, for instance to 40 voxels. That is, when reading out data from the database, only structures are taken in consideration which have a negative distance, i.e. are intersecting, or are within this maximum distance.

As already mentioned, data of neurobiological structures are very voluminous, and it is useful to store such voluminous data in a central database, connected to a server. Furthermore, it is preferred that the distance tables, too, are stored in an off-core memory.

Normally, after an amount of data, in particular neuronal data, have been retrieved, further data will be retrieved later on, and it is suitable to add this new data to the database already existing. Accordingly, it is advantageous to pairwise merge distance tables and looking-up tables referring to data retrieved at different times to a common distance table and to a common look-up table.

Preferably, also object queries are carried out on the basis of special distribution of objects around a selected object of interest. Here, preferably, each object query provides a list of objects close to, or intersecting the selected object as well as the minimal distances in voxels.

Furthermore, it is possible by semantic queries to retrieve semantic information associated with objects in the database and to display this information together with the object query result.

## Brief description of the drawings:

The invention is described in the following by referring to preferred examples to which the invention is not limited, as well as with reference to the drawings. In these drawings,

Fig. 1 schematically shows a central neuronal system of a fruit fly;
Fig. 2 illustrates a template volume in conjunction with a Gal4-volume in the neuronal cluster of a fruit fly;
Fig. 3 schematically illustrates a 2D-Hilbert curve s(t), with a map of a 2D space, shown in part (a), which is mapped on a 1D curve shown in part (b);
Fig. 4 shows several examples of curves for mapping a 2D space onto a 1D curve; namely so called "Peano curves", in line (1), in parts (a), (b), (c); "Z-order curves" in parts (d), (e), (f) (line 2); and "Hilbert curves" in line (3), that is in parts (g), (h) and (i) of fig. 4; in particular, here the curves are shown in the principle form, then in a first iteration and finally in a second iteration;
Fig. 5 schematically shows a system for carrying out visual queries according to the present invention;
Fig. 5A shows a screen shot on the visualization display of such a system, illustrating a list of structures in the selection panel and further semantic information in connection with the visualization of a fly brain;
Fig. 6 schematically illustrates, in parts (a) and (b), how distance tables may be derived from data objects, here in a simplified 2D-version;
Fig. 7 schematically shows the sketching of an interface-path comprised of a row of points, for carrying out path queries in the neuronal data of a fruit fly;
Fig. 8 shows a scheme illustrating the principle concept of a point query;
Fig. 9 illustrates, in upper line (A), the calculation of a distance table and a look-up table, here again in simplified 2D manner, and in lower line (B) the use of the tables for a point query according a path query as outlined in Fig. 7;
Fig. 10 shows in a manner similar to Fig. 9 the calculation of a distance table and a look-up table using a 2D Hilbert scan (first line A) and the use of the tables for a point query (line B) ;
Fig. 11 illustrates a scheme for a preprocessing pipeline;
Fig. 12 schematically illustrates 3D Hilbert scans of different size (2x2x2 voxels in part (a), 4x4x4 voxels in part (b) and 8x8x8 voxels in part (c));
Fig. 13 schematically shows the indirections in the case of 2D Hilbert scanning;
Fig. 14 shows, in parts (a) and (b), schemes representing the merging of distance tables and look-up tables, in the form of flow charts, where it is also shown that an intermediate look-up table is stored since in the future it could be needed to merge a given distance table with other distance tables;
Fig. 15 and 16 show schematic illustrations of examples of merging using Hilbert indirection (fig. 15) and z-order indirections (Fig. 16), where element-wise addition is used to concatenate look-up tables and a union operation is used to concatenate the distance tables;
Fig. 17 illustrates a scheme showing a concept of an object query; and
Fig. 18 schematically illustrates the investigation of voxel pairs for two objects i and j.

## Detailed description of the drawings

Orientation in large collections of spatial structures still poses a problem. Traditional table-view database interfaces allow filtering items and accessing known subsets of data, but do not support selection based on spatial relationships.

In the following, a technique of visual queries, for rapidly accessing structures from the database based on the spatial information, will be described.

To give an introduction, it is first referred to Fig. 1 which schematically illustrates a part of a fruit fly 1, showing the brain 2 and the ventral nerve cord (VNC) 3 of the fruit fly 1. These two organs 2, 3 are composed by neuronal cells called neurons. Neurons transmit excitements by electrochemical signaling. The communication between individual neurons happens via connections called synapses. The short processes called dendrites are excitement-receptive and lead the signal into the cell body. The long process called axon transmits the excitement from the cell body to other cells. The neuronal tissue is supported and nourished by tissues called neuroglia. The network of dendrites, axon and glial branchings, which form the bulk matter called neuropil, embeds the neuronal cell bodies.

This rather simple organism of the fruit fly is a favorite model for research because it facilitates studies of intricate systems on a simple example; studies of the simple organism of the fruit fly can help to demystify relevant complex human traits such as sleep, alcohol dependency, and neurodegenerative dis- eases such as Parkinson and Alzheimer.

The Gal4/UAS system is used to label and manipulate specific neurons in the fly brain and ventral nerve cord. The brain and nerve cord are separately dissected. Specific neurons are stained. Additionally, separate neuropil staining is used to facilitate registration - it highlights regions of high synaptic density which provide a stable morphological reference. After preparation and staining, the tissues are scanned using a laser scanning confocal microscope to generate 3D images (i.e. stacks of 2D images) of the respective object.

The image showing the neuropil staining is then used to perform non-rigid registration of the scans to a corresponding template for either brain or ventral nerve cord. The template was generated by averaging a representative set of scans registered against a reference scan. The registration process itself is automatic, but results are manually verified and additional image processing operations may be applied to reduce noise. Only scans considered to be registered with sufficient accuracy are used for the database.

The following table 1 shows typical types of neuronal data:

Table 1: Types of Neuronal Data

| Database representation | Representation | Staining method | Biological meaning |
|---|---|---|---|
| *Cell body* | Geometry | Gal4/UAS | Cell body |
| *Axon Tract* | Skeleton graph | Gal4/UAS | *Axon Tract* |
| *Arborization* | Geometry | Neuropil | *Arborization* |
| *Template* | Volume | Neuropil | Brain or VNC |
| *Neuropil* | Geometry | Neuropil | *Neuropil* |
| *Confocal image* | Volume | Gal4/UAS | Selected neuronal tissue |
| *Average Image* | Volume | Gal4/UAS | Average of confocal images |

Each neuron is characterized by three types of features: a cell body, the axon tract, which is an elongated structure that spreads over large areas, and arborizations, which contain synapses where communication with other neurons occurs. Neurons are classified based on the morphology or shape of these features.

Overall, four different objects are segmented: neuropils, cell bodies, axon tracts and arborizations. The segmented surfaces of neuropils, cell bodies and arborizations are stored as triangular meshes. In contrast, axon tracts are represented as skeleton graphs.

All acquired volumes and objects, i.e. the corresponding data, are stored on a file server and their references are inserted into the relational database. The database also facilitates storage of annotations of individual objects and allows the user to associate different objects into neural clusters.

Fig. 2 depicts an example of a template 4 of the brain of a fruit fly 1 which provides anatomical context in conjunction with a Gal4-volume 5 and a neural cluster which consists of three arborizations 6, two axon tracts 7 and one cell body 8.

There are on-line atlases available which offer illustrated and annotated descriptions of organs. They help to localize neuronal structures and bring a system and coherency into the nomenclature of anatomical structures. Coherency, a logical system, and localization are crucial in computer-aided applications. In neuroscience, the construction of such tools is helpful for easy and quick localization, search and analysis of neurological structures. In the article Maye et all., "Visualization, reconstruction, and integration of neuronal structures in digital brain atlases", International Journal of Neuroscience, 116(4):431-459, 2006; an overview of methods for neurological data reconstruction and visualization, creating atlases and registering the data is presented. A survey on multidimensional and metric data structures and query methods for spatial databases is given in Gaede et al., "Multidimensional access methods", ACM Computing Surveys, 30(2):170-231, 1998. Spatial data are defined by an explicit information about their extent and position in space. Gaede et al. discuss specific types of queries on these types of data - point and region queries. A point query returns all objects intersecting a selected point in space. A region query selects all objects intersecting a selected region in space. Users can interact with the query results, e.g., make a union or intersection.

There exists no linear mapping of a multidimensional space into 1D space which fully preserves spatial locality.

Voxels which are direct neighbors in a 3D volume might not be direct neighbors when serialized on a disk. However, there exist techniques which attempt to maximize locality, as would be important for fast search operations in spatial databases and to ensure database scalability. Among numerous well-known approaches to the organization of spatial data on a disk, Kd-trees, Octrees, BSP-trees and space-filling curves may be mentioned as prominent ones, cf. e.g. Donald Hearn and M. Pauline Baker, Computer Graphics with OpenGL. Prentice Hall, 3rd edition, 2004, with respect to tree configurations.

Space-filling curves s(t) are fractal curves which provide one-to-one mapping between points in a multidimensional and a 1D space $R^n \rightarrow R$ and well-preserve the spatial distance between points. A family of 2D space-filling curves was introduced by Giuseppe Peano in 1890.

Fig.3 illustrates a space-filling Hilbert curve s(t) which maps a 2D square into a 1D curve $R^2 \rightarrow R$.

A discrete representation of these curves can be computed using an L-System, cf. Przemyslaw Prusinkiewicz and Aristid Lindenmayer, "The Algorithmic Beauty of Plants", Springer-Verlag, 1st edition, 1990. An L-System consists of an initial shape, alphabet and grammar building rules. Iterative application of grammar rules transforms the initial shape and converges to the solution.

In Fig. 4, building rules are shown for different types of space-filling curves - a Peano curve - first line (1); a Z-order curve - second line (2); and a Hilbert curve - third line (3).. After an infinite number of iterations on a 2D curve each point of a square belongs to the curve. Space-fillings curves are used to order discrete multidimensional data on a disk. Fig. 4 shows a serialization, i.e., a linear order, of a $2^b \times 2^b$ matrix of points. In the following, it is refered to linear ordering of discrete multidimensional data as to a "scan".

For linear ordering of multidimensional data on a disk, a Hilbert curve has proven to be a good choice because in the family of space-filling curves, it preserves the proximity the best. In W. J. Gilbert et al., "A cube-filling hilbert curve", The Mathematical Intelligencer, 6(3):78, 1984, the construction of a cube-filling Hilbert curve is described. There exist many algorithms for 3D Hilbert-scanning-algorithms.

Hilbert's, curve provides a scanning order for multidimensional data which well preserves locality. Thus, it is widely used in digital image processing. However, sampling of space-filling curves s(t) poses a difficulty. Given a cuboid region and a point $s(t) \in R^n$, the deduction of t is rather cumbersome. At present, there exists no solution for direct computation of the curve s(t) or inversely $s^{-1}(s(t))$. The whole curve s(t) must be computed for the whole region using one of the proposed algorithms.

The exploration of neuronal databases has been investigated by several researchers. So, direct queries on raster data such as visual queries on images have been provided. For instance, A. Sherbondy et al., "Exploring connectivity of the brain's white matter with dynamic queries", IEEE Transactions on Visualization and Computer Graphics, 11(9):419-930, 2005, describe a set of interaction techniques that makes the exploration and interpretation of pathways in brain easy. The queries are interactive - the user marks a box or ellipse-shaped region and all pathways crossing this region are shown. The framework supports boolean operations on the regions of interest.

Visualization techniques for microscopy data are being explored since computer-aided microscopy is used in bioscience. Early work on microscopy data focused on image processing techniques, notably noise reduction, because the early microscopy scans were of worse quality than today. The microscopy scanning devices recently progressed, and the microscopy images of today are of much higher quality. The evolution of computer and microscopy hardware solved many of the problems addressed in the earliest works.

More recent approaches employ modern and innovative user interfaces and state-of-the art visualization techniques. For example, O'Conor et al., "3D visualisation of confocal flourescence microscopy data", Proceedings of EUROGRAPHICS, pages 49-54, 2004, and Wang et al., "Gpu-based visualization techniques for 3D microscopic imaging data", Proceedings SPIE, page 64981H, 2007, used programmable graphics hardware to achieve higher performance.

In numerous cases, researchers want to analyze and process a collection of datasets simultaneously, e.g., to test their hypothesis. Processing each dataset individually is time-consuming. On the other side, in fully-automated batch processing of the whole collection of datasets, only final results are displayed, and the user cannot intervene into the process. Leeuw et al., "Visualization and analysis of large data collections: A case study applied to confocal microscopy data", IEEE Transactions on Visualization and Computer Graphics, 12(5):1251-1258, 2006, describe techniques for visualization and analysis of large data collections applied on confocal microscopy data. The presented system uses a hybrid approach combining the two processing approaches. Furthermore, a plethora of visualization tools such as histograms, scatter plots and parallel coordinates is incorporated.

In the past, direct volume rendering techniques were combined with shaded isosurfaces using techniques for mixing volumetric images and geometry, and even rendering of multichannel volumes. The system described herein uses known visualization techniques in conjunction with a novel approach of quick data retrieval in a database of neurobiology structures, using also spatial and semantic information.

For the present method and system, it is preferred to use the open-source volume rendering framework so called "VolumeShop", cf. Bruckner et al., "An interactive system for direct volume illustration", Proceedings of IEEE Visualization, pages 671-678, 2005, where specialized plugins as described hereinafter may be smoothly integrated.

"VolumeShop" has a flexible architecture which allows to rapidly integrate new functionality. The architecture of the system consists of a relational database connected to a file server, spatial indices of the data, and the visualization tools. The entities communicate via interfaces. The latter are responsible for the construction of the visual queries.

Fig. 5 illustrates the connections of entities and concept of the entire system 9 including - preferably local - computer means 10 (CPU) as well as - preferably remote - server means 11.

In this system 9 all data provided are stored on a file server 11. The application also supports offline access where the files are stored on a local medium and a local relational database 12. However, the database 12 and the server 11 are intended for access over a network, and the datasets are transferred to the local machines (e.g. 10) on demand. In this manner, researchers/users are able to provide and maintain their data on the server 11 and their clients view and explore them at local machines.

All data provided may be present in a native general-purpose file format. As shown in Table 1 above, templates, confocal images, and average-images are stored as volumes (i.e. 3D images). Arborizations, neuropils, and cell bodies are represented as geometry and projections as skeleton graphs.

The relational database 11 may store additional information about the present neuronal structures. This additional information may comprise properties such as expert's comments, clusters, whether the structure was retrieved from a brain 2 or from a VNC 3, and the gender of the organism it was retrieved from. A user interface 13 contains a selection panel displayed on a visualization means (display) 14 which shows a list of structures in the database 12. A user 15 selects individual structures from the file list to be added into the visualization, which then also appear in the view panel. The file list in the selection panel on display 14 can be filtered using additional information stored in the database 12. In the search panel, the user 15 can make a set-up to display only the structures which were retrieved from a female brain. The structures which were retrieved from a VNC or from a male organism do not appear in the list then. The search panel may also contain a field for keyword-based search.

Fig. 5A depicts a typical screenshot of the user interface showing a visualization window, a view panel, a search panel, and a selection panel. In the search panel, a restricted list with the keywords "projection" and "only" is present. The restricted list in the selection panel contains only files containing both keywords in their annotations. This feature easies the orientation in the long file listings stored in the database.

In Fig. 5, then, data interpretation and data handling is shown at block 16, with a runtime memory 16' shown schematically, and a visual query module is schematically shown at block 17, that is within the (local) computer means 10. An arrow 18 illustrates direct queries in the database 12; finally, at 19, preprocessing of data is schematically illustrated, to obtain spatial indices, as shown at 20, and as described more in detail below.

The database 11 provides context-based search. The user 15 picks structures by their names or by using filtering options. However, up to now, search and exploration based on the spatial information is not supported; users cannot automatically select structures crossing particular points in the volume, the closest objects to an object of interest, and directly retrieve information about objects by clicking on them in the visualization. However, these tasks are of great interest of researchers. To this end, specific queries, here called "path-based queries", are proposed. A path-based query (or in short: path query) provides efficient retrieval of structures crossing a tight region around a path sketched over the visualization. The concept of a path-query is that, first, the user interactively sketches a path over the visualization as in Fig. 5A, cf. also Fig. 7. Consequently, a list of available structure crossing this region appears in the menu. Second, the user loads, e.g., all axon tracts from the list path.

It is preferred to provide the user with two additional types of visual queries: object queries and semantic queries.

Spatial indices, as shown in Fig. 5 at 20, represent packed spatial information about individual objects stored on the file server. They are advantageous for efficient path and object queries. At runtime, it is wished to rapidly calculate distances to n closest structures from any point in the volume. Furthermore, it is wished to quickly provide a list of n closest objects to any object of interest. Considering that the file server 11 stores several 10.000 or even 100.000 of structures, a runtime calculation normally would be impossible. Thus, two tables containing point and object distances are computed in the preprocessing step 14, using a separate tool.

Fig. 6 schematically illustrates fields of the mentioned distance tables. In part (a), each row of a distance table 21 refers to a point 22 in the space. The distances are measured using the chamfer metric. In Fig. 6, part (b), each row 21' refers to an object A1; C1, C2. When two objects (e.g. C1, C2) intersect, the corresponding value in the table 21' is negative and its absolute value indicates the intersection volume. The application accesses these precomputed tables 21, 21' for distance look-up at runtime which makes the distance calculation fast.

In the following, the concept of visual queries - path, object and semantic queries, as implemented in the present system - is described more in detail, together with how a user may define each type of query. As mentioned, path (and object) queries require precalculation of spatial indices 20.

The present path queries are a powerful searching method; they enable searches for structures crossing a defined region. These regions are user-defined using an intuitive sketching interface, compare Fig. 7. Defining a region of interest while sketching an arbitrary path 25 is more flexible than selecting regions with some rectangular or elliptical markers. The query provides all structures crossing an area tight to the user-defined path 25. This area is suitably restricted to a maximum radius, e.g. a radius of 40 voxels around the path 25. In practice, each path query 25 falls apart into a set of point queries at points 26, as illustrated in Fig. 7.

Using the described data structures, it is possible to efficiently determine objects in the vicinity of a voxel. For performing path queries, it is therefore necessary to identify a corresponding 3D object-space position for each 2D point along the path. Whenever a new point is added to the path, a depth buffer is read at the corresponding 2D location, and the inverse viewing transformation is used to transform it into object space.

For geometry rendering, this results in the position on the surface of the object closest to the viewer.

For volume rendering, however, several samples along a ray may contribute to a pixel. For each viewing ray, it is therefore preferred to write the depth of the sample which contributes most to the final pixel color. Particularly in conjunction with the volume rendering technique this approach has proven useful - as stained tissues are presented visually more prominent, the respective depth will give access to objects in the vicinity of high-intensity volumetric structures. Using the depth buffer in this way also ensures that there is always a good correspondence between the selected query locations and the actual visualization when operations such as cropping have been applied or a slicing plane is displayed in the 3D visualization.

More in detail, individual point queries work as follows. For each point 26 (Fig. 7), the (x, y)-coordinates in the screen space are known, and the z-coordinate is retrieved from the depth buffer. The point 26 is transformed from screen space coordinates $p_s$ into volume space coordinates $p_v$. As the volume space coordinates $p_v$ are rounded, $p_v$ refers also to a voxel in the volume. With $p_v$ as input, the point/path query delivers a list of pairs < d, id > with a distance d to a respective structure and a structure identifier id, sorted by d. The distance d refers to the shortest distance from $p_v$ to the surface of the structure id. When $p_v$ lies inside of a structure, d is negative, as already indicated. The distance restriction of e.g. 40 voxels does not apply for negative distances because there is a great interest in every object if $p_v$ lies inside. Fig. 8 shows the general concept of a point query 17'.

In the preprocessing step 19 (s. Fig. 5), lists for each point in the volume, i.e., distance tables 27, are prepared. The size of the distance table 27 file grows with the number of objects on the server 11. As it shall be possible to insert new files, a significant growth of the distance table file size is to be expected. For these reasons, this file is kept in an off-core memory and not in the runtime memory (RAM). A precomputed look-up table (LUT) is used then to efficiently retrieve rows of the distance table 27 stored in the off-core memory. For each point in the volume $p_v$ the LUT provides an offset of the row corresponding to $p_v$ in the distance table 27. Second, the LUT provides a count of the pairs < d, id > in each row. The size of the LUT is constant and independent from the number of structures, so it can be kept in the runtime memory.

In Fig. 9, the concept of the distance table 27 and LUT table and their use for a query is schematically demonstrated on a 2D example with three structures A1, C1, C2. With respect to a 3D image (volume), a 3D curve, e.g. a 3D Hilbert curve, is scanned; for each voxel reached, the neighbouring objects and the respective distances are calculated and stored in the distance table in the corresponding line as pair (distance; object id). The distance table is established, i.e. filled, in the order of the processing of the voxels,; therefore, the line index i of the matrix corresponds to the processing order of the voxel $v_i$ of the 3 D image. In the case of a Hilbert curve, the positive neighbourhood properties are transferred thereby to the distance table; in this case, a temporary look-up table is generated, as will be described herein after with reference to Fig. 10.

In the example of Fig. 9, the distances d were restricted to maximum of $d_{max}$ = 3 voxels. In Fig. 9, part (A), every point (0,0), (1,0) ... (3,3) of a 4x4 region is investigated, the sorted list of pairs < d, id > are determined (distance table 27), and the LUT is created on the basis of the distance table 27.

In Fig. 9, part (B), the user selects a point, e.g. (1, 2), in the region; on the basis thereof, the offset (3) and the count (24) are retrieved from the LUT. This is the key information to read the row corresponding to the list of pairs < d, id > in the distance table 27 which was created in the preprocessing step. In the example shown, the disk read head skips offset = 24 pairs of the file and reads subsequent count = 3 pairs.

The distance table 27 and the LUT are serialized, i.e., by their ascending linear indirections $lin(\vec{p})$ as defined in the following Equation (1) with $\hat{x} \times \hat{y} \times \hat{z}$ = volumesize. Under "indirections", an ordering pattern of voxels is understood.

$$lin(\vec{p}) = p_x + p_y\hat{x} + p_z\hat{x}\hat{y} \qquad (1)$$

While drawing a path, point queries for points located close to each other are automatically called. The point queries fetch the respective rows from the distance table 27.

To improve the performance, it is preferred to use neighborhood-preserving storage pattern of rows using a 3D Hilbert scan. Thus, the rows of the distance table 27' using Hilbert scan indirections are stored, as schematically demonstrated in Fig. 10. The < d, id >-pairs inside the rows of the distance table 27' are not permuted. From this distance table 27', a first look-up table LUT' is generated, as described above; here, line no. i (with i = 1, 2, 3, ...) of the distance table 27' corresponds to line i in the LUT'. The two columns of LUT' contain the following information: number of all objects which were neighbours of the voxels which have been processed before the actual voxel $v_i$ (1st column); and number of the objects which are neighbours of the actual voxel $v_i$ (2nd column).

To create the final LUT, the lines of LUT' are permuted such that their order corresponds to the "natural" linear order of the corresponding voxel in the volume (3D image), cf. equ. (1), to enable quick - temporary - access to the information in the LUT. Accordingly, by reordering the (count and offset)-pairs in accordance with the ordering (0,0), (1,0), (2, 0) ... (3,3) of the 2D region as shown in Fig. 10, the final LUT is obtained. The final LUT must be accessible using linear indirections. It thus contains the offset and count information with relation to the permuted distance table. Comparing Figures 9 and 10, it can be seen that the fetch of a row from the distance table 27 or 27' has the same logic if the permutation is used when using 3D Hilbert scan indirections. Using the described storage pattern enables to keep the easy and quick look-up in the LUT and to gain performance while reading from the distance table file. With other words, the information in the LUT makes it possible for each voxel of the image or volume to directly determine at which position of the memory containing the distance table the information with respect to the neighboured objects may be found, and to calculate how many objects are "neighbored", i.e. until where the memory must be read.

The results of all point queries along the sketched path are merged together and presented to the user in an in-window hypertext label. If there are more < d, id > pairs for one object id, only the pair with lowest distance d is kept.

For preprocessing, a preprocessing pipeline 30 is used which consists of six stages, as shown in Fig. 11.

The structures in the database 12 may be represented as geometry or skeleton graphs. According to Fig. 11, in a first step, distance field volumes 31 are gradually created for each structure. For skeleton graphs, it is possible to extrude the graph with some radius and to create the surface geometry representation. For geometry, it is possible to compute signed distance fields, to obtain distance tables 27/27', s. step 32 in Fig. 11, thereby choosing signed distance fields using chamfer metric. Each voxel of the distance field volume stores the distance to the surface in voxels. Signed distance fields enable to distinguish between the inside and the outside regions of each structure. The negative distances represent the inside area. It is possible to record the mentioned steps and automate the processing using batch files. This makes it possible to generate a distance field for each structure without individual intervention.

According to step 33 in Fig. 11, a 3D Hilbert scan for indirection indices is generated. In particular, a cuboid region with the size of the volume $\hat{x} \times \hat{y} \times \hat{z}$ is scanned. Fig. 12, parts (a), (b) and (c), schematically illustrate 3D Hilbert scans of differently sized regions.

In Table 2, the indirection indices corresponding to the scan shown in Fig. 12 are given.

Table 2: Indirections for 3D Hilbert scan of size 2x2x2.

In accordance with the above, a distance table with n = $\hat{x} \times \hat{y} \times \hat{z}$ empty rows may be prepared, and the distance field

| 3D Hilbert scan *s(t)* | Volume coordinates $\vec{p}_v^T$ | linear indirection $lin(\vec{p}_v)$ |
|---|---|---|
| s(0) | (0,0,0) | 0 |
| s(1) | (0,1,0) | 2 |
| s(2) | (0,1,1) | 6 |
| s(3) | (0,0,1) | 4 |
| s(4) | (1,0,1) | 5 |
| s(5) | (1,1,1) | 7 |
| s(6) | (1,1,0) | 3 |
| s(7) | (1,0,0) | 1 |

volumes are processed voxel-by-voxel. For each voxel v with position $\vec{v} = (v_x, v_y, v_z)^T$, the distance d which is the voxel value is investigated. If d ≤ 40, the pair < d, id > is inserted into the r-th row of the distance table. In this case, simple linear indirection of the volume is used where $r = lin(\vec{v})$. The "id" is the identifier of the currently processed distance field volume (structures).

After the last distance field volume has been processed, the rows of the distance table 27/27' are sorted ascendingly with respect to the distance d of the pairs < d, id >. The entire rows of the distance table are written on the disk obeying 3D Hilbert scan indirections. For example, the rows of a distance table of a 2x2x2 volume would be stored in a permuted order (0, 2, 6, 4, 5, 7, 3, 1) as indicated in Table 2 above.

Then, the look-up table LUT' is generated (step 34 in Fig. 11) corresponding to the permuted distance table. Consequently, the LUT' is also permuted and cannot be accessed via simple linear indirections. However, the permuted LUT' can be needed for later merging of tables. Thus, this table LUT' is written as temporary data.

Thereafter, the LUT is generated, with the line permutation, as described above, cf. also steps 35, 36 in Fig.

11. The permutation (inverse indirections) map the 3D Hilbert scan back to the linear indirections.

In Fig. 13, the mapping from linear indirections to 2D Hilbert indirections and the mapping from 2D Hilbert indirections back to the linear indirections are illustrated. Both mappings are represented as permutations.

After the last stage of the preprocessing procedure, two tables, LUT and the distance table 27 or 27', have been generated which are ready to be used by the application. It is to be kept in mind that preferably, also the temporary permuted LUT' is kept which may be used for merging. Namely, expecting a significant growth of the database, the present system provides merging distance tables and LUTs. Furthermore, the preprocessing calculation requires a lot of RAM. However, the amount of available RAM is limited, so it cannot be guaranteed that all data can be successfully processed at once.

It is possible to overcome the RAM limitation by merging as follows: The data are split into n disjoint groups, n distance tables $DT_a$, $DT_b$ ... and LUTs $LUT_a$, $LUT_b$ ... are generated, and these are merged pairwise. Finally, a single distance table $DT_{ab}$ and a single LUT table $LUT_{ab}$ representing all structures are provided. The major requirement for the merging algorithm are handling of large data and requiring a low amount of RAM. Fig. 14 illustrates, in a flowchart, such merging of two distance tables $DT_a$ and $DT_b$ (part A) and two look-up tables $LUT_a$ and $LUT_b$ (part B). Rows of the distance tables $DT_a$ and $DT_b$ can be concatenated using a union operation because they refer to two disjoint set of objects. The number of pairs in the new row equals the sum of the pairs in the corresponding rows in $DT_a$ and $DT_b$. This property makes merging of look-up tables (LUT' and LUT) easy. Offsets and counts of two old look-up tables are simply added, and a new valid look-up table is obtained.

In Figures 15 and 16, there are given two simplified examples of pairwise merging of tables using Hilbert, or Z, indirection. It is shown that addition of the look-up tables LUT and union of distance tables 27 works also for different indirections.

The system described, with its specific data preprocessing and corresponding use of storage means, has several essential advantages. In the present approach, the precomputed distance tables 27 are used to determine closest objects for each point which has the following particular advantages. The table is precomputed only once in a preprocessing step and the tables are merged when new data are to be inserted. At runtime, however, only one look-up per point of the sketched path is performed. Moreover, the distance table stores the < d, id >-pairs in a sorted order, so that it is possible to perform no sorting and no distance calculation at runtime. The knowledge of the point distance d is essential as the key for sorting and for approximation of the real distance. The performance of the application also benefits from the locality-preserving storage pattern applied to the distance table using the 3D Hilbert scan indirections.

The present approach has been compared with the so-called Fibonacci coding of the spatial data which bases on the Zeckendorf theorem. This theorem states that every positive integer n can be uniquely represented as a sum of nonconsecutive Fibonacci numbers $F_k$ (k = 0 ... L).

At the present system, every object in the database 11 is assigned an id = $F_k$. When objects i and j intersect, and $id_i = F_k$, then $id_j \neq F_{k+i}$. The voxels store n which is the sum of the ids of all incident objects. This refrains from storing the whole list of ids for each voxel. However, the Fibonacci numbers increase rapidly - $F_{48}$ exceeds the range of the 32-bit unsigned integer. As a number of objects to index L > 300 may be foreseen, this method becomes inconceivable regarding storage. Furthermore, this method requires decomposition of the indices into $F_k$s and calculation of the distances at runtime which is a disadvantage.

In comparison to the present method, prior art approaches such as space-partitioning, e.g., kd-trees or octrees have the following disadvantages: Many neuronal structures in the database 12 have intersections. Space-partitioning methods would represent them as single tree-nodes. Consequently, for each node, saving a list of id-pairs of all incident objects is foreseen. In contrast, the distance table stores the lists of < d, id >-pairs for every point in the volume. The storage requirements of a kd-tree or of an octree are inferior to the storage requirements of the present distance table because the tree-nodes cover more than one voxel. If the tree-nodes store < d, id >-pairs, the storage requirements are equal to the present approach, so the space-partitioning method brings no advantage. Assuming that the tree-nodes do not implicitly store the distance information to the incident objects, the application must determine them at runtime while performing computational costly operations. Therefore, the performance of the space-partitioning methods is inferior to the performance of the present method. As one of the goals of this invention is to implement an interactive tool, the performance is the primary benchmark and storage the secondary. Furthermore, the implementation of the present method is intuitive and simpler as the implementation of a space-partitioning method. Also, merging of two space-partitioning trees is more complex and costly then merging of two distance tables as proposed in this section.

Hypertext labels may be used to present query results to the user on display 14. They pop up in-window which enables the user to keep focus on the visualization. A label appears in the corner of the window when user clicks with the mouse button and starts sketching the path. A color-coded slider may be attached to the label which enables control over the search radius around the path. The radius is by default set to 0 voxels. The label displays hyperlinks to whole subgroups, and to individual structures within each subgroup, and also the number of structures found for each subgroup. The hyperlinks use the same color-coding scheme as the slider which enables the user to quickly associate the structure some degree of proximity. This information is updated while the user keeps sketching.

When the user releases the mouse button, the path is finished, and the label moves to the center of the window. The user can adjust the search radius and inspect the results. Eventually, the user may click on hyperlinks to load structures individually or a whole subgroup of structures at once.

In addition to path queries related to spatial distribution of objects around points in the volume, the preferred set includes also object queries. Other than to path queries, they are related to spatial distribution of objects around a selected object of interest. In practice, this query provides a list of closest objects and their distances in voxels. If two objects intersect, the volume of their intersection is provided instead of the distance.

Object queries 17' (cf. Fig. 17) work as follows. It is preferable to provide an "id" of the selected objects as input and the query returns a list 37 of objects sorted by the distance. The negative distances again indicate intersection volumes. Similarly as for the path queries, a table, i.e., object table, is created in a preprocessing step.

In practice, it may be started with an n×n-matrix M. $M_{ij}$ stores the minimal distance between objects i and j, or eventually their intersection volume. All matrix elements $M_{ij}$ are initialized to the highest distance which can occur, i.e., $d_{max} = \sqrt{\hat{x}^2 + \hat{y}^2 + \hat{z}^2}$, with $\hat{x}\hat{y}\hat{z}$ = volumesize. Each pair of distance field volumes described above is inspected voxel-by-voxel. The matrix M is symmetric, so once the pair of distance fields ij has been inspected, it is not necessary to inspect the pair ji.

Voxel pairs $v_i^p$ and $v_j^p$, i.e., voxels of the object i and j at the position p in the volume, are gradually investigated, and the following cases (see also Fig. 18), are distinguished:

The value of $v_i^p = 0$: here, $v_i^p$ belongs to the surface of the object i; the matrix M is modified as follows. If $v_j^p > 0$ and $v_j^p < M_{ij}$, the value of $M_{ij}$ is replaced by $v_j^p$. For example, the sampling position A in Fig. 18 (a) fulfils this condition - it lies on the surface of the object i, but outside of the object j. If $v_j^p \leq 0$ then p belongs to the intersection volume. For example, sampling positions B and C in Fig. 18 (a) comply with this condition, because they both belong to the surface of the object i and lie either on the surface or inside of the object j. In this case, $M_{ij}$ is set to -1 if $M_{ij} \geq 0$, or $M_{ij}$ is decremented otherwise.

The value of $v_i^p < 0$, and $v_j^p < 0$: both voxels belong to the intersection of the objects i and j, i.e., sampling position A in Fig. 18 (b); the matrix M is modified as follows. If $M_{ij} \geq 0$ then $M_{ij}$ is set to -1, else $M_{ij}$ is decremented.

The value of $v_i^p > 0$: here, $v_i^p$ belongs neither to the surface of the object i, nor to its inside area, as it is the case of the sampling positions A and B in Fig. 18 (c); in this case, the matrix M is not modified.

Elements of $\hat{M}_{ij}$ above the diagonal (i > j) are filled, and the symmetry is used to copy $\hat{M}_{ij}$ to elements below the diagonal $\check{M}_{ij}$. From each row of the matrix M, a list L consisting of < d, id >-pairs is generated where d = $M_{ij}$ and id = j. As there is no interest in elements $M_{ij}$ such that i = j, so we exclude them from L. In the final step, L is sorted by increasing distances d. The finalized object table stores minimal distances between objects, or the total volume of their intersection. In the case that objects have multiple disconnected intersections, the sum of the volumes of their partial intersections is stored.

An object table needs to be updated only when new objects are inserted into the database. Let A be the set of old objects and B the set of inserted objects. Then $A \cap B = \emptyset$, |A| = n, and | B| = m. It may be proceeded as follows.

Initialize an (n + m) × (n + m)-matrix M and use the old object table to fill the maximum of elements.

For all objects ∈ B, compute a m × m-matrix M' of distances and intersection volumes. $M'_{ij}$ stores a distance or an intersection volume between the objects i and j, such that i, j E B. M is used tofill the additional elements of M.

For all objects ∈ B, compute an m × n-matrix M''. Matrix elements $M''_{ij}$ store distances or intersection volumes between objects i and j, such that i ∈ B and j ∈ A. M'' is used to fill the remaining elements of M; sorting is carried as described above.

Researchers sometimes annotate objects in the database and associate them to clusters. Semantic queries may retrieve this information and display it together with object query results in a hypertext label as mentioned above. Associated structures are listed as hyperlinks. Activating them triggers loading of the respective objects. This is a powerful method of browsing through the data. Structures such as arborizations represent synapses which are often part of more clusters. Results of a semantic query allow the user to load them and explore the further connections. In this manner, neuroscientist can follow neural paths.

The visualization entity as indicated at 14 in Fig. 5 is an important node of the system. Visual queries are based on an interactive visualization. Numerous prior art visualization tools allow 3D data exploration which may include standards for viewpoint control such as rotation, zooming and panning, masking control such as clipping planes and cropping boxes and different renderers. The latter provide slice-rendering, direct volume rendering with interactive transfer function and geometry rendering. Other utilities supporting user's work comprise synchronized viewing windows, image and video-capture and saving of the current session. Such visualization techniques, need no detailed description as, in principle, they are state-of-the-art. The visualization entity 14, however, is essential to carry out a visual query.

One of the major requirements of researchers is the support for combined visualization of geometry and volumes and concurrent rendering of multiple volumes. A typical case is, e.g., locating more structures such as cell bodies and arborizations inside a template, which provides an anatomical context. At the same time, they may want to explore additional volumes. In this particular case, concurrent visualization of multiple volumes and geometry is necessary. Furthermore, exploration of numerous structures at the same time leads to a visual clutter. The aim is now to maximize the information the user can get from the visualization and to minimize the clutter. Thus, approaches to the concurrent visualization of volumes and to the geometry rendering are discussed in short.

Maximum Intensity Projection (MIP) is often used in biomedical visualization. This technique retains the highest values along the projection rays. Researchers also prefer MIP over direct volume rendering (DVR). However, employing visualization using MIP destroys the depth perception. On the other hand, using DVR instead of MIP leads to occlusion of important maxima. This is a significant problem especially when a researcher explores several volumes and the template. The template should build an anatomical context but should not occlude the important information provided by volumes. Therefore, a hybrid approach called Maximum Intensity Difference Accumulation (MIDA) described in Bruckner et al., "Instant volume visualization using maximum intensity difference accumulation", Computer Graphics Forum, 28(3), 2009, may be used. This technique ensures that the strong features of the stained data remain unoccluded by the template volume.

The article of Bruckner et al. describes MIDA for mono-channel data, employing an additional modulation factor for the color and opacity composition equation used for DVR. Equations (2) present the color composition in DVR. The color and opacity are accumulated along the rays. $\mathfrak{C}_i$ and $\mathfrak{A}_i$ denote the color and opacity of the i-th sample along the ray-traversal. $C_i$ and $A_i$ represent the accumulated color and opacity at the i-th step of the ray-traversal. The initial values $C_0$ and $A_0$ are both zero.

$$\left.\begin{aligned} A_i &= A_{i-1} + (1 - A_{i-1})\mathfrak{A}_i, \quad i = 1..n \\ C_i &= C_{i-1} + (1 - A_{i-1})\mathfrak{A}_i\mathfrak{C}_i, \quad i = 1..n \end{aligned}\right\} \quad (2)$$

Equations (3) denote a compositing method employed in MIDA. The additional parameter $\mathfrak{B}_i$ represents the modulation factor at the i-th step of the ray traversal.

$$\left.\begin{aligned} A_i &= \mathfrak{B}_i A_{i-1} + (1 - \mathfrak{B}_i A_{i-1})\mathfrak{A}_i, \quad i = 1..n \\ C_i &= \mathfrak{B}_i C_{i-1} + (1 - \mathfrak{B}_i A_{i-1})\mathfrak{A}_i\mathfrak{C}_i, \quad i = 1..n \end{aligned}\right\} \quad (3)$$

The modulation factors $\mathfrak{B}_i$ are calculated at each sampling step as in Equation (4). The parameter $\delta_i$ is introduced to make the later transition to multi-channel MIDA easier. Parameter $s_i$ denotes the density sampled at the i-th step and $max_i(s_k)$ denotes the maximal density of samples taken at steps k=0..i - 1.

$$\mathfrak{B}_i = \begin{cases} 1 - \delta_i = 1 - (s_i - max_i(s_k)), & \text{if } s_i > max_i(s_k),\ k = 0..i-1 \\ 1, & \text{otherwise} \end{cases} \quad (4)$$

This composition method strengths maxima changing from a lower to higher value. This way, the maxima remain visible as in MIP. The other tissue along the ray also contributes, but with subtler transparency as in DVR.

It is wished to handle up to four different volumes. The volumetric data are scalar fields, thus it is possible to use four components (RGBA) to store four different volumes. In view of the given multi-channel data, the mono-channel approach of MIDA may be adjusted for multi-channel data as follows. For color and opacity mixing of each channel, the composition scheme described by Kniss et al., Gaussian transfer functions for multi-field volume visualization, Proceedings of IEEE Visualization, pages 497-504, 2003, may be used. Assume that there are n volumes $v_j(x)$, j = 1..n, $x \in R^3$ and n transfer functions assigning color and opacity to samples - $C_j(v_j(x))$ and $\alpha_j(v_j(x))$, j = 1..n, $x \in R^3$ or simply $c_j$ and $\alpha_j$. The opacity of each sample $\mathfrak{A}_i$ may be calculated as the sum of opacities of each channel $\alpha_{ji}$. The color of each

sample $\mathfrak{C}_i$ equals the sum of all colors at each channel $c_{ji}$ weighted by opacities as denoted in Equation (5):

$$\mathfrak{A}_i = \sum_{j=1}^{n} \alpha_{ji} \quad \mathfrak{C}_i = \frac{\sum_{j=1}^{n} \alpha_{ji} c_{ji}}{\sum_{j=1}^{n} \alpha_{ji}} \tag{5}$$

Even though the compositing equation (Equation (3)) for multi-channel data is the same as for mono-channel data, the computation of parameters $\mathfrak{B}_i$ is more complex. For each channel j and each sample along the ray i, $\delta_{ji}$ is calculated as in Equation (6) where $s_{ji}$ denotes the i-th sample of the channel j. The parameters $\delta_{ji}$ are used for further calculations of the modulation factors $\mathfrak{B}_i$ in Equation (7). The additional weighting of $\delta_{ji}$ by opacity suppresses contribution of invisible samples.

$$\delta_{ji} = \begin{cases} s_{ji} - max_{ji}(s_{jk}), & \text{if } s_{ji} > max_{ji}(s_{jk}),\ k = 0..i-1 \\ 0, & \text{otherwise} \end{cases} \tag{6}$$

$$\mathfrak{B}_i = 1 - max(\delta_{ji} \frac{\alpha_{ji}}{max(\alpha_{ji})}),\ j = 0..i-1 \tag{7}$$

Standard geometry rendering techniques may be used for all non-volumetric structures. Geometry rendering has many advantages. First, the standard per-pixel phong shading, is a realistic smooth surface representation. Second, this method is fast because it is hardware-accelerated. Third, surface representation with geometry allows easy rendering of outlines in slice views as mentioned above. However, e.g. the axon tracts are originally stored as skeleton graphs. To this end, a tessellation using cylinder-like extrusion of the graph may be provided.

Thus, the present visualization system is a rendering system based on a frame buffer/depth buffer. The 3D position $p_v$ of a point in the resulting image can be determined by means of a transformation matrix as well as the depth buffer. Normally, for geometric objects, the depth as stored in the depth buffer corresponds to that surface point which is the next to the viewer. However, this would not be apt for volumes, and therefore, the depth of that respective point along a viewing ray is written into the depth buffer which has the maximum contribution to the final pixel, as results from equations (3) above. The stored depth value corresponds to that point along the viewing ray for which $(1 - \mathfrak{B}_i A_{i-1})$ is a maximum.

As already mentioned, too, the respective query results are presented by means of interactive hypertext labels which are represented directly in the visualization window. With the aid of these labels, the query results may be inspected and loaded into the display window. Furthermore, it is possible to interactively filter the query results (distance slider).

To demonstrate the advantageous results achievable with the present system, some use-case scenarios are presented now.

To illustrate a typical scenario of using a path-query, the user, first, explores an average Gal4-volume in conjunction with a template which provides anatomical context. The average Gal4-volume depicts a particular neuronal tissue of interest which includes, e.g., neurons and arborizations. An expert user is able to recognize structures within the average Gal4-volume. Consequently, the user desires to further inspect these regions to exactly identify the structures. For example, the user sketches a path over the region which was identified as a bundle of axon tracts. A hypertext label may show the axon tracts which cross this region, and the user loads them all by clicking on the axon tracts label. In the same fashion, the user marks a region and loads the closest cell body, and the closest arborization. Consequently, a proximity cloud indicating the extent of the search region appears.

As mentioned, object queries may provide information about distances and intersections between objects which enables fast and simple browsing. For example, the user is able to quickly determine which neurons cross a particular part of the brain. Regions of the brain which have been segmented from the template image of the brain can be loaded via the table-view interface to the database and selected with a mouse click on their visualization. The hypertext label displays the object query results. The user adjusts the slider so that only structures which have intersections are shown. Thus, only filtered structures appear in the filtered list. To load all filtered structures, the user may click on the hyperlink neuronal projections. Consequently, all axon tracts crossing the selected brain region appear in the visualization. Object queries also enable the user to quickly find a region of the brain to which a particular structure belongs to. To this end, the user may click on the depicted structure in the visualization to prompt an object-query results label. The slider is adjusted to show only structures which intersect the selected structure. Subsequently, the user loads all tissue regions with intersections. In the view panel, the user may uncheck regions identified as not appropriate; then, for instance, only one tissue region may remain in the visualization for further inspection.

A typical case of applying a semantic-query is finding neural clusters which are related to a particular structure. In particular, arborizations are members of several neural clusters. Semantic-query enables the user to view and compare the entire clusters. Here the user may, at first, select a particular arborization. The semantic-query displays all cluster to which the selected arborization belongs to. Second, the user selects one of the proposed clusters, which is consequently loaded into the visualization.

In practice, all three types of queries may be used in conjunction with each other. For instance, the user desires to identify a particular region of the brain; then, the user uses the path-query to find the closest tissue region which includes the sketched path. Consequently, the tissue region displayed in the query results at the most left is loaded. By clicking on the loaded region, all information may be displayed which is stored in the database about this region and the results of the object query. When continuing browsing by loading all axon tracts crossing the selected tissue region, the highlighted axon tract is selected for further inspection. The user applies the semantic-query to load the associated neuronal cluster.

The performance of the present system has been evaluated as follows.

First, the latencies (in ms) while reading rows of the distance table from the disk were measured. To provide comparative values, the following criteria have been complied with. First, the latencies while reading rows of the distance table employed in practice (185MB) and while reading rows of a large distance table (2GB) were compared, s. Tables 3 and 4 below. For this purpose, an additional distance table with distance restriction of 256 voxels instead of 40 voxels was generated. Second, the latencies while reading rows of the distance tables which use the 3D Hilbert indirections as in Fig. 10 and the linear indirections as in Fig. 9 were compared.

Third, the latencies for sketching done on the 3D visualization and on 2D slices were inspected. While the user sketches a path on a 2D slice, the path becomes a plane curve. However, while sketching on the 3D visualization, e.g., DVR, the path defines a space curve.

With respect to the results of the latency measurements as summarized in Tables 2 and 3, each comparative value presented in the tables is the average value over five independent measurements. During sketching, the system processes path queries and renders with frame rates up to 30Hz. All measurements were performed on a workstation equipped with an Intel®6600 Core Duo™ CPU 2.4GHz, 2.0GB RAM, a hard disk VelociRaptor 10000RPM with 16MB cache and 4.2ms seek time and a NVIDIA® 8800 GTX GPU.

Table 2: Latencies measured on the 185MB-large distance table.

| | 3D Hilbert indirections | Linear indirections |
|---|---|---|
| ***Slice XY*** | 0.86ms | 0.6ms |
| ***Slice YZ*** | 1.09ms | 1.6ms |
| ***Slice ZX*** | 0.49ms | 3.6ms |
| ***DVR*** | 0.38ms | 1.92ms |

Table 3: Latencies measured on the 2GB-large distance table.

| | 3D Hilbert indirections | Linear indirections |
|---|---|---|
| ***Slice XY*** | 2.46ms | 1.32ms |
| ***Slice YZ*** | 3.1ms | 4.95ms |
| ***Slice ZX*** | 1.3ms | 2.97ms |
| ***DVR*** | 3.04ms | 4.15ms |

## Claims

1. A method of visual queries with respect to volumetric data which are to be visualized together with data of geometric objects, wherein data are stored in a database (12) and computer means (10) comprising visualization means (14) are provided for visualization of structures defined by the volumetric data, and associated data, **characterized in**

**that** in a preprocessing step (19), a row of volume elements of a region of interest is selected, and a respective distance table (27; 27') is calculated for said row of volume elements, said distance table comprising pairs of structure distance values (d) and structure IDs (id), whereafter on the basis of said distance table, an associated look-up table (LUT) is established which contains a count of the pairs of structure values (d) and structure IDs (id) as well as an offset of the row in the distance table, said look-up table being kept in a runtime memory (16') with limited capacity, and to allow to read out respective pairs (d, id) in the distance table, wherein rapid access to data via the respective look-up table and the distance table is performed, so that it is then possible to finally read out the structure data from the database.

2. The method according to claim 1, **characterized in that** the calculation of the distance table (27; 27') is performed on the basis of a 3D Hilbert scan, to obtain neighbourhood-preserving storage patterns of rows.

3. The method according to claim 1 or 2, **characterized in that** the distances (d) are limited to a maximum distance value, e.g. to 40 voxels.

4. The method according to any one of claims 1 to 3, **characterized in that** the distance table (27, 27') is stored in an off-core memory (12).

5. The method according to any one of claims 1 to 4, **characterized by** pairwise merging distance tables ($DT_a$, $DT_b$) and look-up tables ($LUT_a$, $LUT_b$) referring to data retrieved at different times to a common distance table ($DT_{ab}$) and a common look-up table ($LUT_{ab}$).

6. The method according to any one of claims 1 to 5, **characterized in that** an object query (17') is carried out on the basis of spatial distribution of objects around a selected object of interest.

7. The method according to claim 6, **characterized in that** the object query provides a list (37) of objects close to, or intersecting, the selected object, and their distances in voxels.

8. The method according to claim 6 or 7, **characterized in that** by a semantic query, semantic information associated with objects in the database (12) is retrieved and displayed together with the object query result.

9. The method according to any one of claims 1 to 8 **characterized in that** the volumetric data refer to neurobiological structures, neuronal data being stored in the database (12).

10. A system for carrying out visual queries with respect to volumetric data which are to be visualized together with data of geometric objects, wherein data are stored in a database (12) and computer means (10) comprising visualization means (14) are provided for visualization of structures defined by the volumetric data, and associated data, **characterized in that** said computer means (10) comprise server means (11) arranged to calculate, in a preprocessing step (19), for a row of volume elements of a region of interest, a respective distance table (27; 27'), comprising pairs of structure distance values (d) and structure IDs (id) and to establish, on the basis of said distance table, an associated look-up table (LUT) which contains a count of the pairs of structure distance elements (d) and structure IDs (id) as well as an offset of the row in the distance table, said look-up table being kept in a runtime memory (16') with limited capacity, and to allow to read out respective pairs (d, id) in the distance table, wherein rapid access to data via the respective look-up table and the corresponding distance table is performed, so that it is then possible to finally read out the structure data from the database.

11. The system according to claim 10, **characterized in that** the calculation of the distance table (27, 27') is performed on the basis of a 3D Hilbert scan, to obtain neighbourhood-preserving storage patterns of rows.

12. The system according to claim 10 or 11, **characterized in that** the distances (d) are limited to a maximum distance value, e.g. to 40 voxels.

13. The system according to any one of claims 10 to 12, **characterized in that** the distance table (27, 27') is stored in an off-core memory (12).

14. The system according to any one of claims 10 to 13, **characterized by** pairwise merging distance tables ($DT_a$, $DT_b$) and look-up tables ($LUT_a$, $LUT_b$) referring to data retrieved at different times to a common distance table ($DT_{ab}$) and a common look-up table ($LUT_{ab}$).

**15.** The system according to any one of claims 10 to 14, **characterized in that** an object query (17') is carried out on the basis of spatial distribution of objects around a selected object of interest.

**16.** The system according to claim 15, **characterized in that** the object query provides a list (37') of objects close to, or intersecting, the selected object, and their distances in voxels.

**17.** The system according to claim 15 or 16, **characterized in that** by a semantic query, semantic information associated with objects in the database (12) is retrieved and displayed together with the object query result.

**Patentansprüche**

**1.** Verfahren für visuelle Anfragen hinsichtlich volumetrischer Daten, die zusammen mit Daten geometrischer Objekte zu visualisieren sind, wobei Daten in einer Datenbank (12) gespeichert sind und Computermittel (10), die Visualisierungsmittel (14) aufweisen, zur Visualisierung von Strukturen, die durch die volumetrischen Daten definiert werden, und zugehörigen Daten bereitgestellt werden, **dadurch gekennzeichnet, dass** in einem Vorverarbeitungsschritt (19) eine Reihe von Volumenelementen eines interessierenden Gebiets ausgewählt werden und eine entsprechende Distanztabelle (27; 27') für die Reihe von Volumenelementen berechnet wird, wobei die Distanztabelle Paare von Strukturdistanzwerten (d) und Struktur-Kennungen (id) aufweist, und dann auf der Basis der Distanztabelle eine zugehörige Nachschlagetabelle (LUT) errichtet wird, die eine Zählung der Paare von Strukturwerten (d) und Struktur-Kennungen (id) sowie einen Versatz der Reihe in der Distanztabelle enthält, wobei die Nachschlagetabelle in einem Laufzeitspeicher (16') mit begrenzter Kapazität gespeichert wird, und ermöglicht wird, jeweilige Paare (d, id) in der Distanztabelle auszulesen, wobei schneller Zugriff auf Daten über die jeweilige Nachschlagetabelle und die Distanztabelle erfolgt, so dass es dann möglich ist, die Strukturdaten schließlich aus der Datenbank auszulesen.

**2.** Verfahren nach Anspruch 1, **dadurch gekennzeichnet, dass** die Berechnung der Distanztabelle (27; 27') auf der Basis einer 3D-Hilbert-Abtastung erfolgt, um umgebungserhaltende Speichermuster von Reihen zu erhalten.

**3.** Verfahren nach Anspruch 1 oder 2, **dadurch gekennzeichnet, dass** die Distanzen (d) auf einen maximalen Distanzwert begrenzt sind, z.B. auf 40 Voxel.

**4.** Verfahren nach einem der Ansprüche 1 bis 3, **dadurch gekennzeichnet, dass** die Distanztabelle (27, 27') in einem Speicher (12) außerhalb des Kerns gespeichert wird.

**5.** Verfahren nach einem der Ansprüche 1 bis 4, **gekennzeichnet durch** paarweises Vereinigen von Distanztabellen ($DT_a$, $DT_b$) und Nachschlagetabellen ($LUT_a$, $LUT_b$) bezüglich Daten, die zu verschiedenen Zeitpunkten abgerufen wurden, zu einer gemeinsamen Distanztabelle ($DT_{ab}$) und einer gemeinsamen Nachschlagetabelle ($LUT_{ab}$).

**6.** Verfahren nach einem der Ansprüche 1 bis 5, **dadurch gekennzeichnet, dass** eine Objektanfrage (17') auf der Basis räumlicher Verteilung von Objekten um ein ausgewähltes interessierendes Objekt herum durchgeführt wird.

**7.** Verfahren nach Anspruch 6, **dadurch gekennzeichnet, dass** die Objektanfrage eine Liste (37) von Objekten, die sich nahe dem ausgewählten Objekt befinden oder dieses schneiden, und ihrer Distanzen in Voxel bereitstellt.

**8.** Verfahren nach Anspruch 6 oder 7, **dadurch gekennzeichnet, dass** durch eine semantische Abfrage semantische Informationen, die zu Objekten in der Datenbank (12) gehören, abgerufen und zusammen mit dem Ergebnis der Objektanfrage angezeigt werden.

**9.** Verfahren nach einem der Ansprüche 1 bis 8, **dadurch gekennzeichnet, dass** sich die volumetrischen Daten auf neurobiologische Strukturen beziehen, wobei neuronale Daten in der Datenbank (12) gespeichert werden.

**10.** System zum Durchführen visueller Anfragen hinsichtlich volumetrischer Daten, die zusammen mit Daten geometrischer Objekte zu visualisieren sind, wobei Daten in einer Datenbank (12) gespeichert sind und Computermittel (10), die Visualisierungsmittel (14) aufweisen, zur Visualisierung von Strukturen, die durch die volumetrischen Daten definiert werden, und zugehörigen Daten bereitgestellt sind, **dadurch gekennzeichnet, dass** die Computermittel (10) Servermittel (11) aufweisen, die dazu ausgelegt sind, in einem Vorverarbeitungsschritt (19) für eine Reihe von Volumenelementen eines interessierenden Gebiets eine entsprechende Distanztabelle (27; 27') zu berechnen, die Paare von Strukturdistanzwerten (d) und Struktur-Kennungen (id) aufweist, und auf der Basis der Distanztabelle eine zugehörige Nachschlagetabelle (LUT) zu errichten, die eine Zählung der Paare von Strukturdistanzelementen (d) und Struktur-Kennungen (id) sowie einen Versatz der Reihe in der Distanztabelle enthält, wobei die Nachschlagetabelle in einem Laufzeitspeicher (16') mit begrenzter Kapazität gespeichert wird, und zu gestatten, jeweilige Paare (d, id) in der Distanztabelle auszulesen, wobei schneller Zugriff auf Daten über die jeweilige Nachschlagetabelle und die entsprechende Distanztabelle erfolgt, so dass es dann möglich ist, die Strukturdaten schließlich aus der Datenbank auszulesen.

**11.** System nach Anspruch 10, **dadurch gekennzeichnet, dass** die Berechnung der Distanztabelle (27, 27') auf der Basis einer 3D-Hilbert-Abtastung erfolgt, um umgebungserhaltende Speichermuster von Reihen zu erhalten.

**12.** System nach Anspruch 10 oder 11, **dadurch gekennzeichnet, dass** die Distanzen (d) auf einen maximalen Distanzwert begrenzt sind, z.B. auf 40 Voxel.

**13.** System nach einem der Ansprüche 10 bis 12, **dadurch gekennzeichnet, dass** die Distanztabelle (27, 27') in einem Speicher (12) außerhalb des Kerns gespeichert wird.

**14.** System nach einem der Ansprüche 10 bis 13, **gekennzeichnet durch** paarweises Vereinigen von Distanztabellen ($DT_a$, $DT_b$) und Nachschlagetabellen ($LUT_a$, $LUT_b$) bezüglich Daten, die zu verschiedenen Zeitpunkten abgerufen wurden, zu einer gemeinsamen Distanztabelle ($DT_{ab}$) und einer gemeinsamen Nachschlagetabelle ($LUT_{ab}$).

**15.** System nach einem der Ansprüche 10 bis 14, **dadurch gekennzeichnet, dass** eine Objektanfrage (17') auf der Basis räumlicher Verteilung von Objekten um ein ausgewähltes interessierendes Objekt herum durchgeführt wird.

**16.** System nach Anspruch 15, **dadurch gekennzeichnet, dass** die Objektanfrage eine Liste (37) von Objekten, die sich nahe dem ausgewählten Objekt befinden oder dieses schneiden, und ihrer Distanzen in Voxel bereitstellt.

**17.** System nach Anspruch 15 oder 16, **dadurch gekennzeichnet, dass** durch eine semantische Abfrage semantische Informationen, die zu Objekten in der Datenbank (12) gehören, abgerufen und zusammen mit dem Ergebnis der Objektanfrage angezeigt werden.

## Revendications

**1.** Procédé de requêtes visuelles concernant des données volumétriques qui doivent être visualisées conjointement avec des données sur des objets géométriques, dans lequel les données sont stockées dans une base de données (12) et des moyens informatiques (10) comprenant des moyens de visualisation (14) sont fournis pour la visualisation de structures définies par les données volumétriques, et de données associées, **caractérisé en ce que** lors d'une étape de prétraitement (19), on choisit une rangée d'éléments de volume d'une région d'intérêt et on calcule une table des distances (27 ; 27') respective pour ladite rangée d'éléments de volume, ladite table des distances comprenant des paires de valeurs de distance de structure (d) et d'identifiants de structure (id), après quoi, sur la base de ladite table des distances, on établit une table de consultation (LUT) associée qui contient un nombre des paires de valeurs de structure (d) et d'identifiants de structure (id) ainsi qu'un décalage de la rangée dans la table des distances, ladite table de consultation étant conservée dans une mémoire d'exécution (16') à capacité limitée, et pour permettre de lire les paires respectives (d, id) dans la table des distances, dans lequel on accède rapidement aux données grâce à la table de consultation respective et à la table des distances, de sorte qu'il est ensuite possible de lire enfin les données de structure à partir de la base de données.

**2.** Procédé selon la revendication 1, **caractérisé en ce qu'**on effectue le calcul de la table des distances (27 ; 27') sur la base d'un balayage 3D de Hilbert, pour obtenir des modèles de stockage des rangées préservant le voisinage.

**3.** Procédé selon la revendication 1 ou 2, **caractérisé en ce que** les distances (d) sont limitées à une valeur de distance maximale, par exemple à 40 voxels.

**4.** Procédé selon l'une quelconque des revendications 1 à 3, **caractérisé en ce que** la table des distances (27, 27') est stockée dans une mémoire non centrale (12).

**5.** Procédé selon l'une quelconque des revendications 1 à 4, **caractérisé par** la fusion par paires de tables des distances ($DT_a$, $DT_b$) et de tables de consultation ($LUT_a$, $LUT_b$) relatives à des données extraites à différents moments en une table des distances commune ($DT_{ab}$) et une table de consultation commune ($LUT_{ab}$).

6. Procédé selon l'une quelconque des revendications 1 à 5, **caractérisé en ce qu'**on effectue une requête sur un objet (17') sur la base de la distribution spatiale des objets autour d'un objet d'intérêt choisi.

7. Procédé selon la revendication 6, **caractérisé en ce que** la requête sur l'objet fournit une liste (37) des objets situés à proximité de l'objet choisi, ou le croisant, et leurs distances en voxels.

8. Procédé selon la revendication 6 ou 7, **caractérisé en ce que** par une requête sémantique, on extrait des informations sémantiques associées aux objets de la base de données (12) et on les affiche conjointement avec le résultat de la requête sur l'objet.

9. Procédé selon l'une quelconque des revendications 1 à 8 **caractérisé en ce que** les données volumétriques concernent des structures neurobiologiques, des données neuronales étant stockées dans la base de données (12).

10. Système permettant d'effectuer des requêtes visuelles concernant des données volumétriques qui doivent être visualisées conjointement avec des données sur des objets géométriques, dans lequel les données sont stockées dans une base de données (12) et des moyens informatiques (10) comprenant des moyens de visualisation (14) sont fournis pour la visualisation de structures définies par les données volumétriques, et de données associées, **caractérisé en ce que** lesdits moyens informatiques (10) comprennent des moyens de type serveur (11) conçus pour calculer, lors d'une étape de prétraitement (19), pour une rangée d'éléments de volume d'une région d'intérêt, une table des distances (27 ; 27') respective, comprenant des paires de valeurs de distance de structure (d) et d'identifiants de structure (id) et pour établir, sur la base de ladite table des distances, une table de consultation (LUT) associée qui contient un nombre des paires d'éléments de distance de structure (d) et d'identifiants de structure (id) ainsi qu'un décalage de la rangée dans la table des distances, ladite table de consultation étant conservée dans une mémoire d'exécution (16') à capacité limitée, et pour permettre de lire les paires respectives (d, id) dans la table des distances, dans lequel on accède rapidement aux données grâce à la table de consultation respective et à la table des distances correspondante, de sorte qu'il est ensuite possible de lire enfin les données de structure à partir de la base de données.

11. Système selon la revendication 10, **caractérisé en ce qu'**on effectue le calcul de la table des distances (27, 27') sur la base d'un balayage 3D de Hilbert, pour obtenir des modèles de stockage des rangées préservant le voisinage.

12. Système selon la revendication 10 ou 11, **caractérisé en ce que** les distances (d) sont limitées à une valeur de distance maximale, par exemple à 40 voxels.

13. Système selon l'une quelconque des revendications 10 à 12, **caractérisé en ce que** la table des distances (27, 27') est stockée dans une mémoire non centrale (12).

14. Système selon l'une quelconque des revendications 10 à 13, **caractérisé par** la fusion par paires de tables des distances ($DT_a$, $DT_b$) et de tables de consultation ($LUT_a$, $LUT_b$) relatives à des données extraites à différents moments en une table des distances commune ($DT_{ab}$) et une table de consultation commune ($LUT_{ab}$).

15. Système selon l'une quelconque des revendications 10 à 14, **caractérisé en ce qu'**on effectue une requête sur un objet (17') sur la base de la distribution spatiale des objets autour d'un objet d'intérêt choisi.

16. Système selon la revendication 15, **caractérisé en ce que** la requête sur l'objet fournit une liste (37') des objets situés à proximité de l'objet choisi, ou le croisant, et leurs distances en voxels.

17. Système selon la revendication 15 ou 16, **caractérisé en ce que** par une requête sémantique, on extrait des informations sémantiques associées aux objets de la base de données (12) et on les affiche conjointement avec le résultat de la requête sur l'objet.

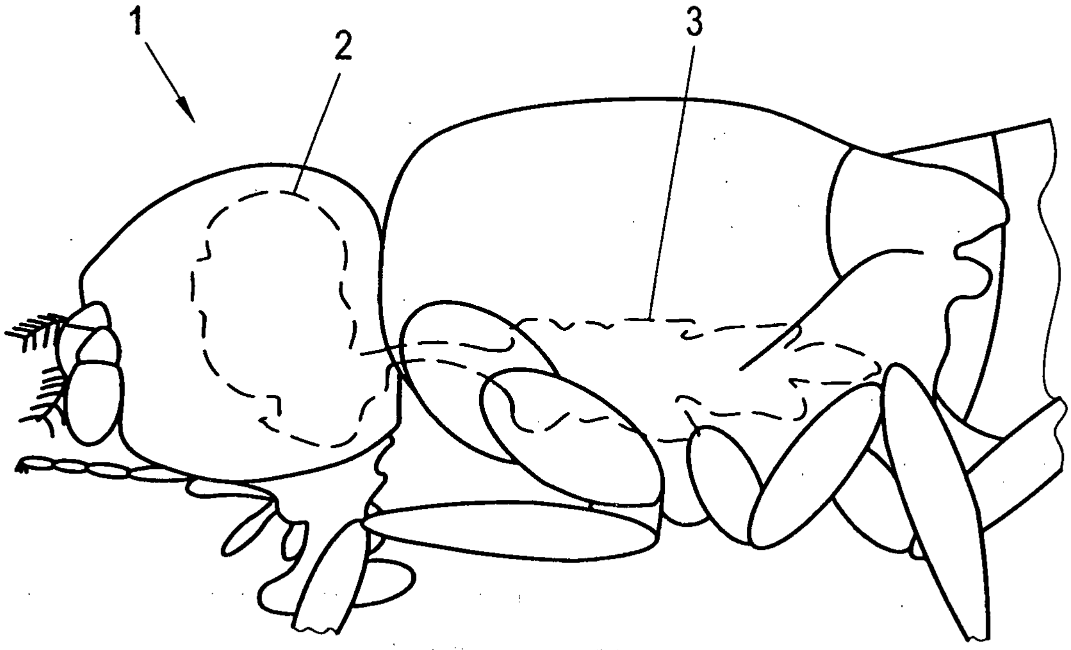


Fig. 1

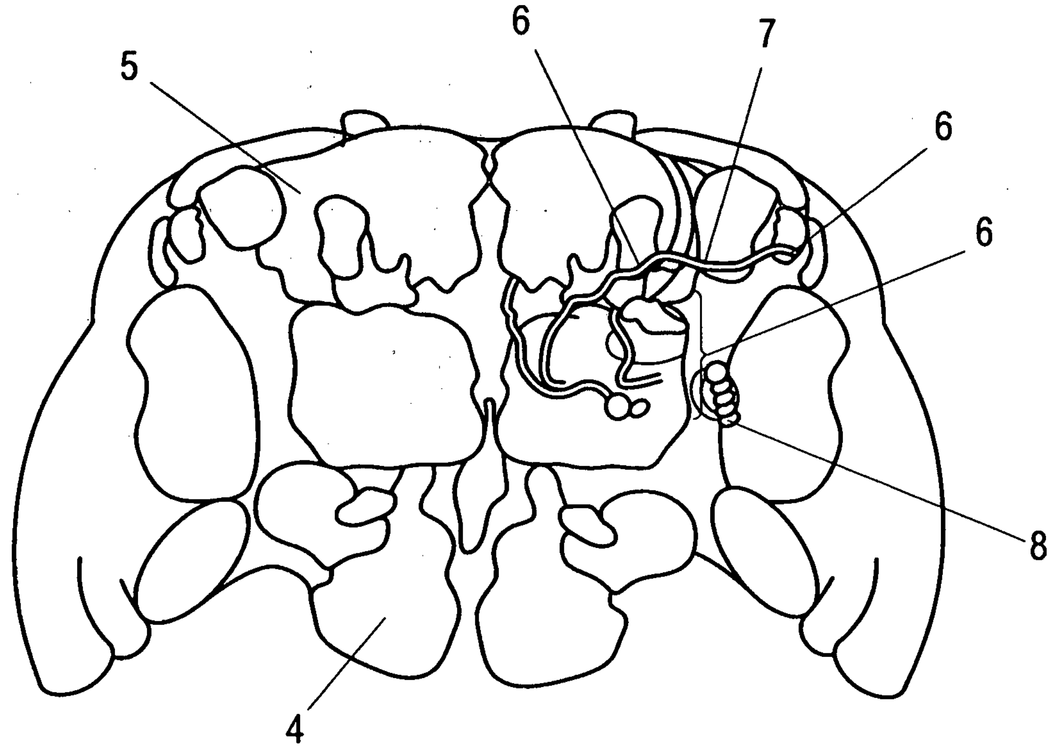


Fig. 2

(HILBERT CURVE)

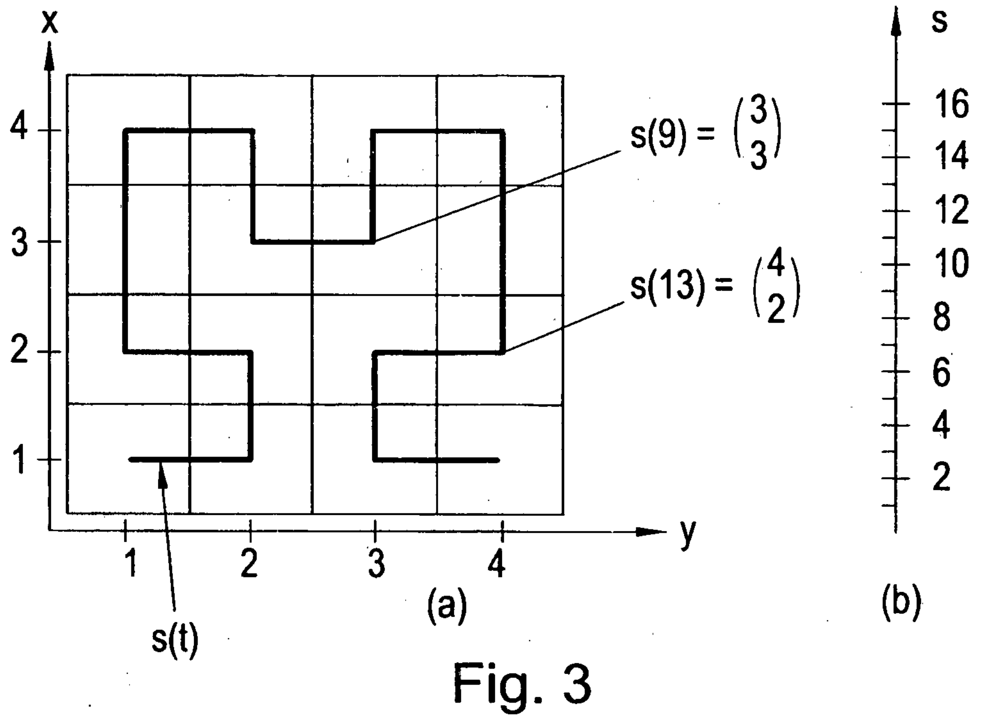


Fig. 3

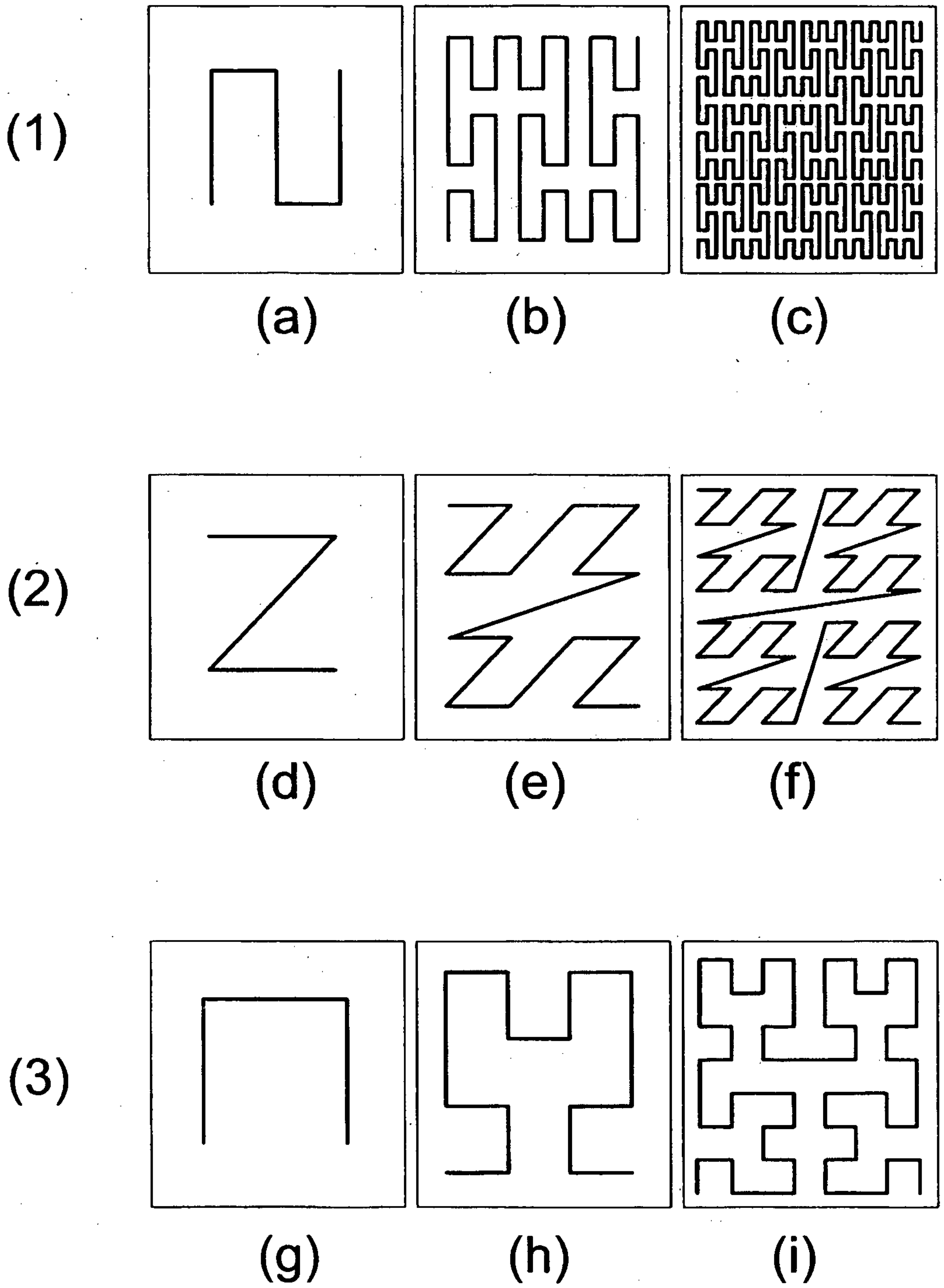


Fig. 4

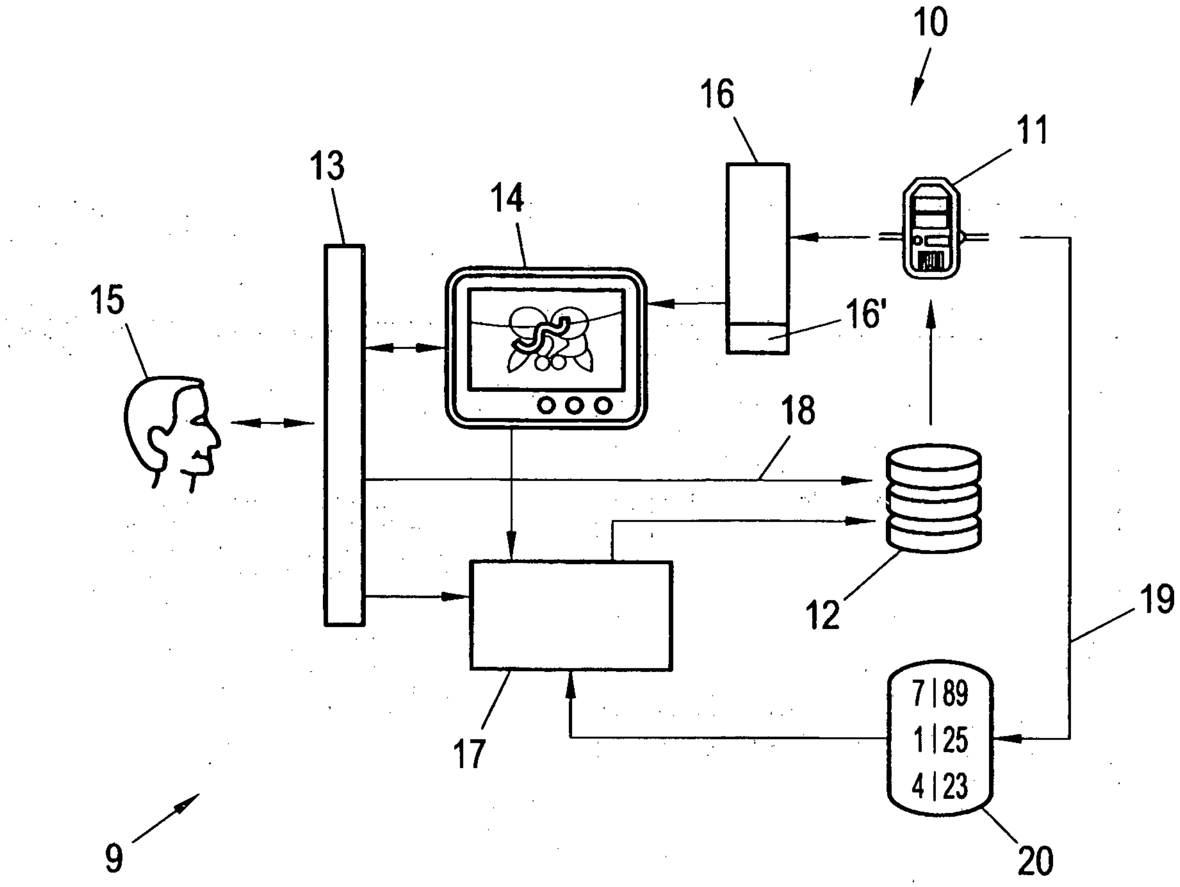
10
16
11
13
14
15
16'
18
12
19
7 | 89
1 | 25
4 | 23
17
9
20

Fig. 5

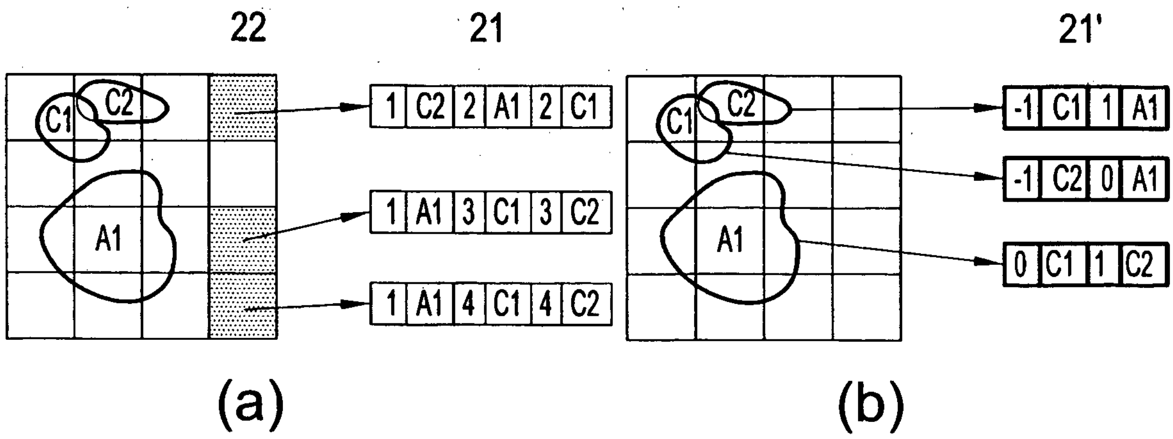
22
21
21'
C1
C2
A1
1 C2 2 A1 2 C1
1 A1 3 C1 3 C2
1 A1 4 C1 4 C2
-1 C1 1 A1
-1 C2 0 A1
0 C1 1 C2
(a)
(b)

Fig. 6

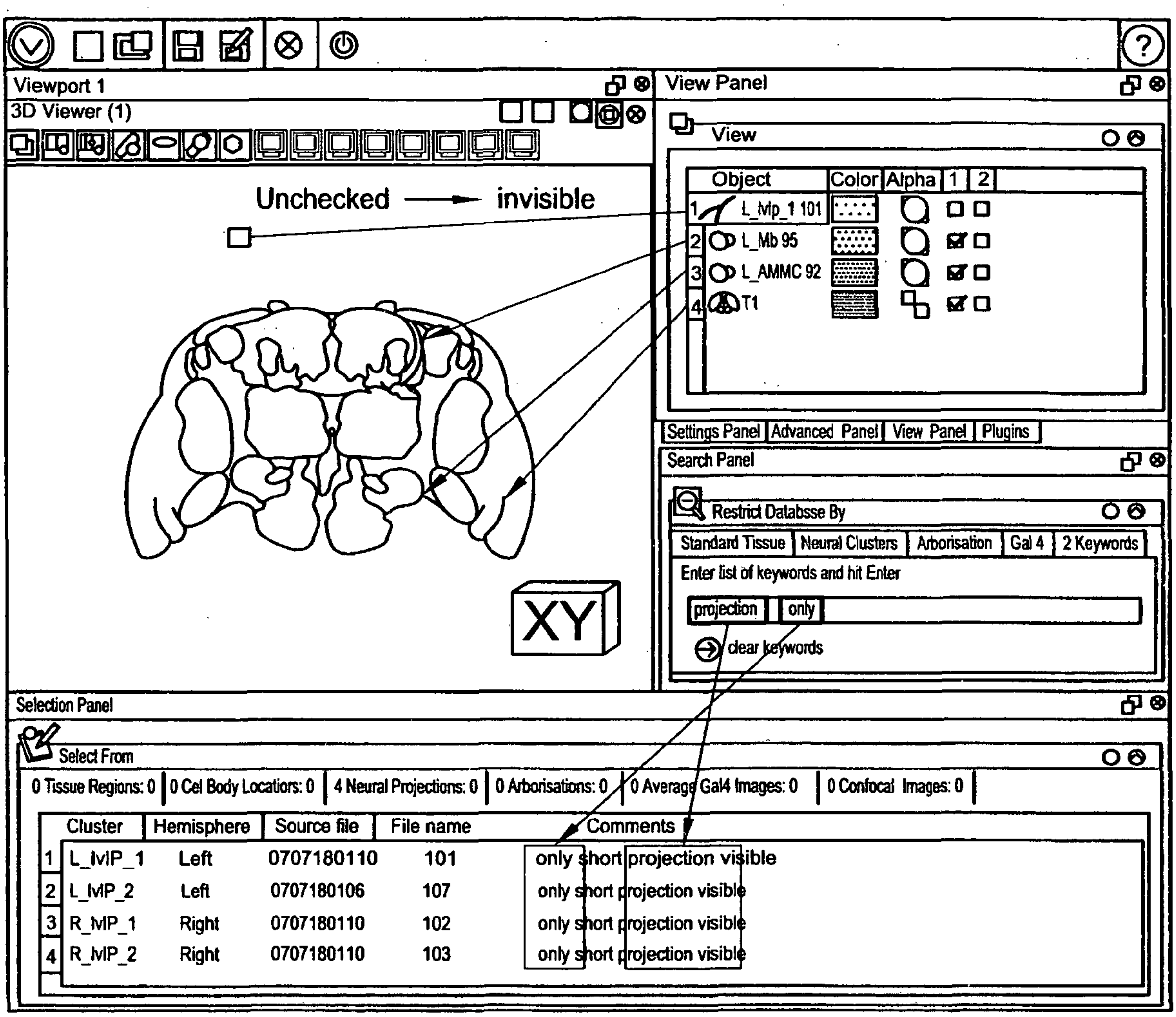
Viewport 1
3D Viewer (1)
Unchecked → invisible
XY
View Panel
View
Object Color Alpha 1 2
1 L_Mp_1 101
2 L_Mb 95
3 L_AMMC 92
4 T1
Settings Panel Advanced Panel View Panel Plugins
Search Panel
Restrict Databsse By
Standard Tissue Neural Clusters Arborisation Gal 4 2 Keywords
Enter list of keywords and hit Enter
projection only
clear keywords
Selection Panel
Select From
0 Tissue Regions: 0 0 Cel Body Locations: 0 4 Neural Projections: 0 0 Arborisations: 0 0 Average Gal4 Images: 0 0 Confocal Images: 0
Cluster Hemisphere Source file File name Comments
1 L_MP_1 Left 0707180110 101 only short projection visible
2 L_MP_2 Left 0707180106 107 only short projection visible
3 R_MP_1 Right 0707180110 102 only short projection visible
4 R_MP_2 Right 0707180110 103 only short projection visible

Fig. 5A

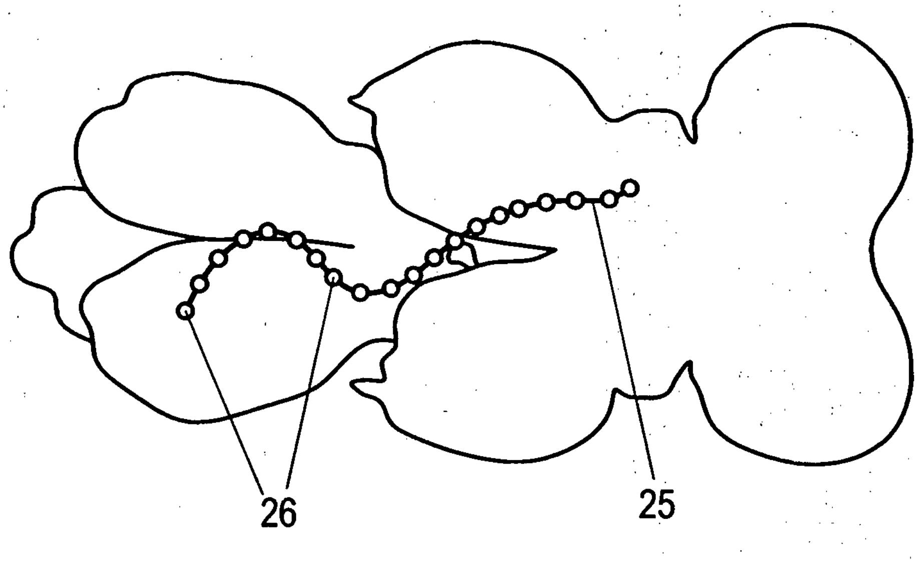
26
25

Fig. 7

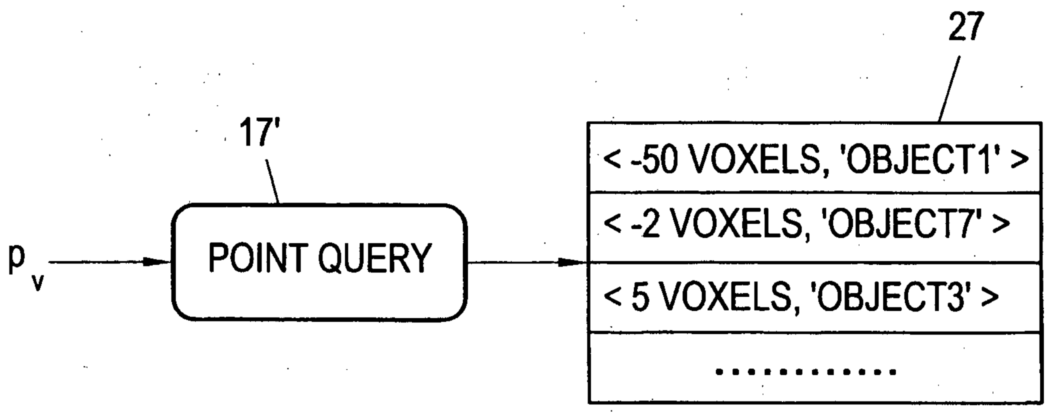
27
17'
p v
POINT QUERY
< -50 VOXELS, 'OBJECT1' >
< -2 VOXELS, 'OBJECT7' >
< 5 VOXELS, 'OBJECT3' >
............

Fig. 8

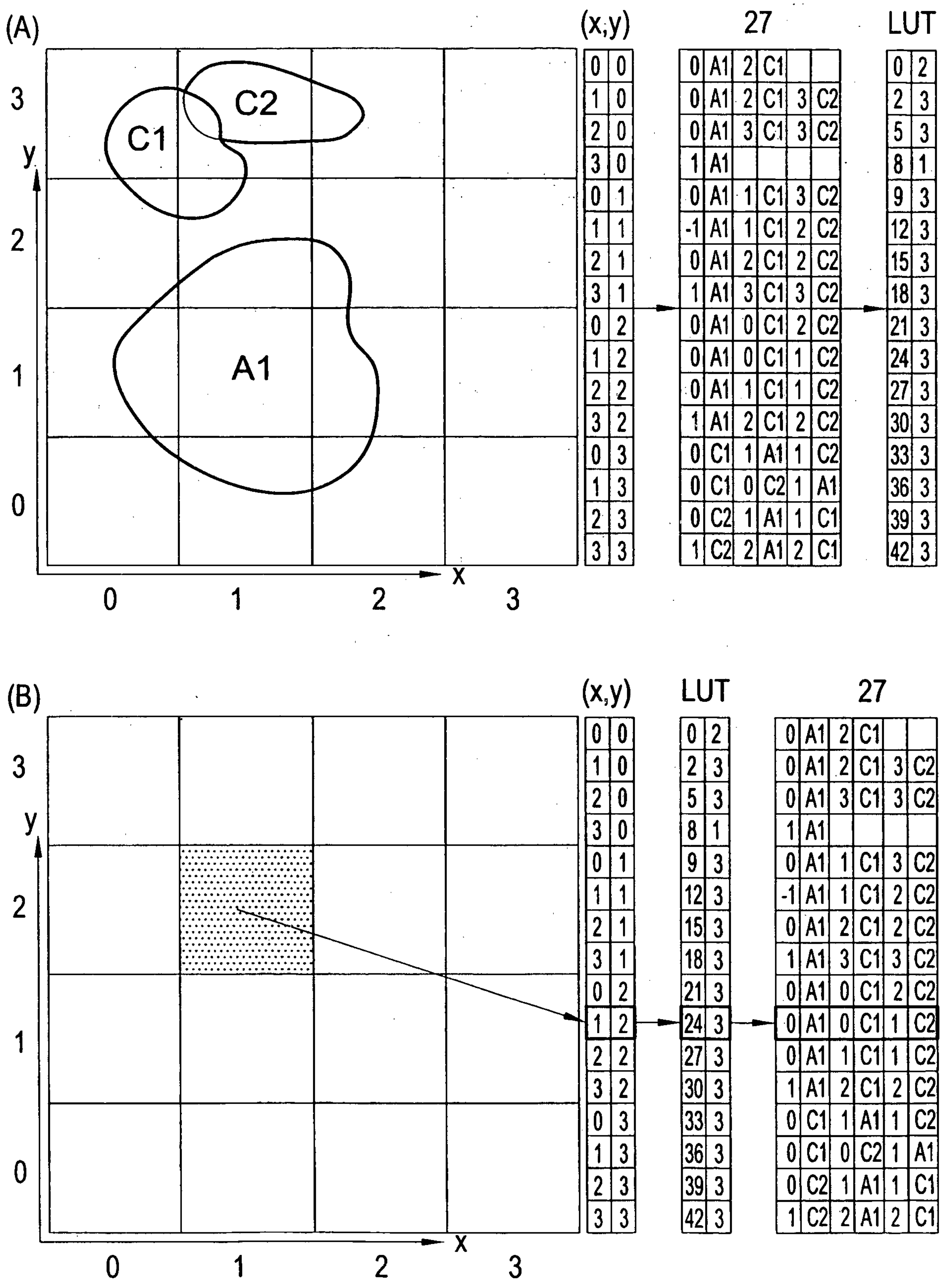


Fig. 9

(A)

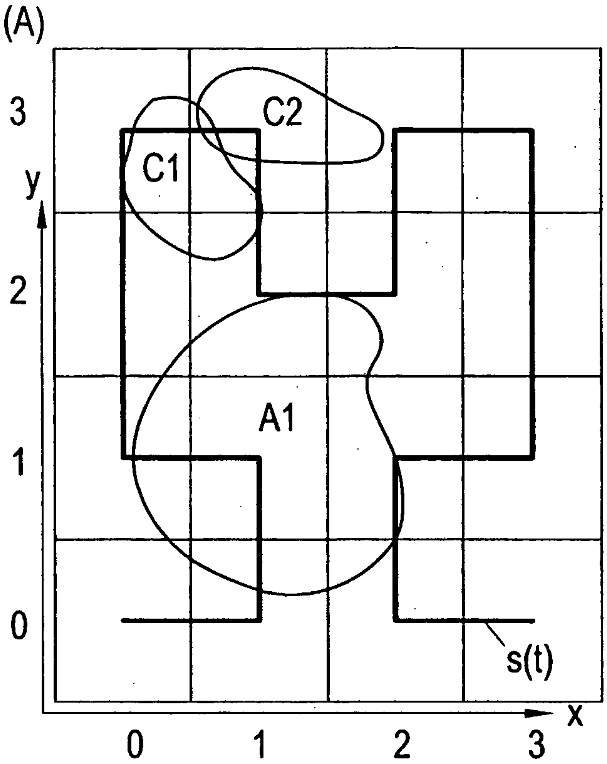


| (x,y) | | 27' | | | | | | LUT' | | LUT | |
|---|---|---|---|---|---|---|---|---|---|---|---|
| 0 | 0 | 0 | A1 | 2 | C1 | | | 0 | 2 | 0 | 2 |
| 1 | 0 | 0 | A1 | 2 | C1 | 3 | C2 | 2 | 3 | 2 | 3 |
| 1 | 1 | -1 | A1 | 1 | C1 | 2 | C2 | 5 | 3 | 41 | 3 |
| 0 | 1 | 0 | A1 | 1 | C1 | 3 | C2 | 8 | 3 | 44 | 1 |
| 0 | 2 | 0 | A1 | 0 | C1 | 2 | C2 | 11 | 3 | 8 | 3 |
| 0 | 3 | 0 | C1 | 1 | A1 | 1 | C2 | 14 | 3 | 5 | 3 |
| 1 | 3 | 0 | C1 | 0 | C2 | 1 | A1 | 17 | 3 | 38 | 3 |
| 1 | 2 | 0 | A1 | 0 | C1 | 1 | C2 | 20 | 3 | 35 | 3 |
| 2 | 2 | 0 | A1 | 1 | C1 | 1 | C2 | 23 | 3 | 11 | 3 |
| 2 | 3 | 0 | C2 | 1 | A1 | 1 | C1 | 26 | 3 | 20 | 3 |
| 3 | 3 | 1 | C2 | 2 | A1 | 2 | C1 | 29 | 3 | 23 | 3 |
| 3 | 2 | 1 | A1 | 2 | C1 | 2 | C2 | 32 | 3 | 32 | 3 |
| 3 | 1 | 1 | A1 | 3 | C1 | 3 | C2 | 35 | 3 | 14 | 3 |
| 2 | 1 | 0 | A1 | 2 | C1 | 2 | C2 | 38 | 3 | 17 | 3 |
| 2 | 0 | 0 | A1 | 3 | C1 | 3 | C2 | 41 | 3 | 26 | 3 |
| 3 | 0 | 1 | A1 | | | | | 44 | 1 | 29 | 3 |

(B)

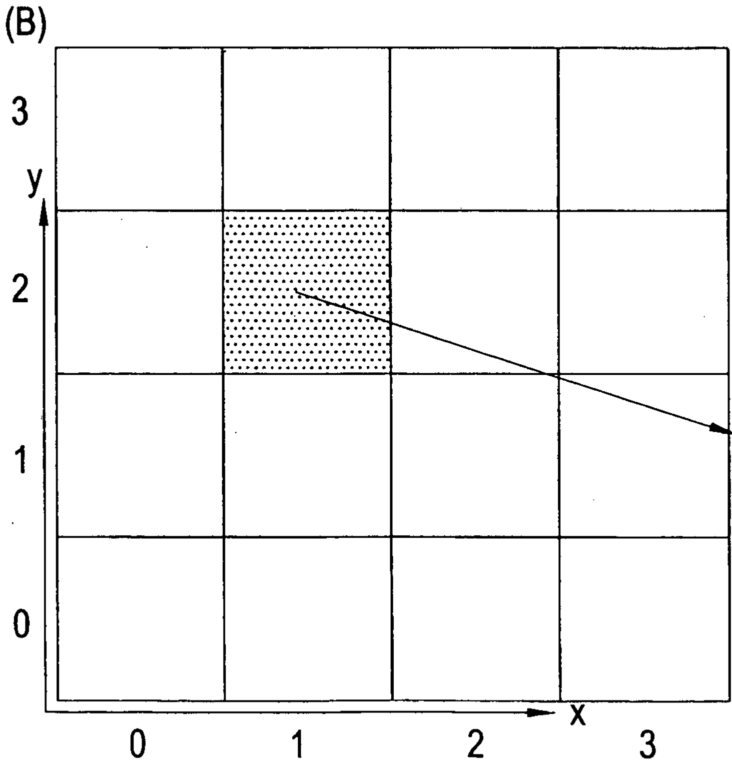


| (x,y) | | LUT | | 27' | | | | | |
|---|---|---|---|---|---|---|---|---|---|
| 0 | 0 | 0 | 2 | 0 | A1 | 2 | C1 | | |
| 1 | 0 | 2 | 3 | 0 | A1 | 2 | C1 | 3 | C2 |
| 2 | 0 | 41 | 3 | -1 | A1 | 1 | C1 | 2 | C2 |
| 3 | 0 | 44 | 1 | 0 | A1 | 1 | C1 | 3 | C2 |
| 0 | 1 | 8 | 3 | 0 | A1 | 0 | C1 | 2 | C2 |
| 1 | 1 | 5 | 3 | 0 | C1 | 1 | A1 | 1 | C2 |
| 2 | 1 | 38 | 3 | 0 | C1 | 0 | C2 | 1 | A1 |
| 3 | 1 | 35 | 3 | 0 | A1 | 0 | C1 | 1 | C2 |
| 0 | 2 | 11 | 3 | 0 | A1 | 1 | C1 | 1 | C2 |
| 1 | 2 | 20 | 3 | 0 | C2 | 1 | A1 | 1 | C1 |
| 2 | 2 | 23 | 3 | 1 | C2 | 2 | A1 | 2 | C1 |
| 3 | 2 | 32 | 3 | 1 | A1 | 2 | C1 | 2 | C2 |
| 0 | 3 | 14 | 3 | 1 | A1 | 3 | C1 | 3 | C2 |
| 1 | 3 | 17 | 3 | 0 | A1 | 2 | C1 | 2 | C2 |
| 2 | 3 | 26 | 3 | 0 | A1 | 3 | C1 | 3 | C2 |
| 3 | 3 | 29 | 3 | 1 | A1 | | | | |

Fig. 10

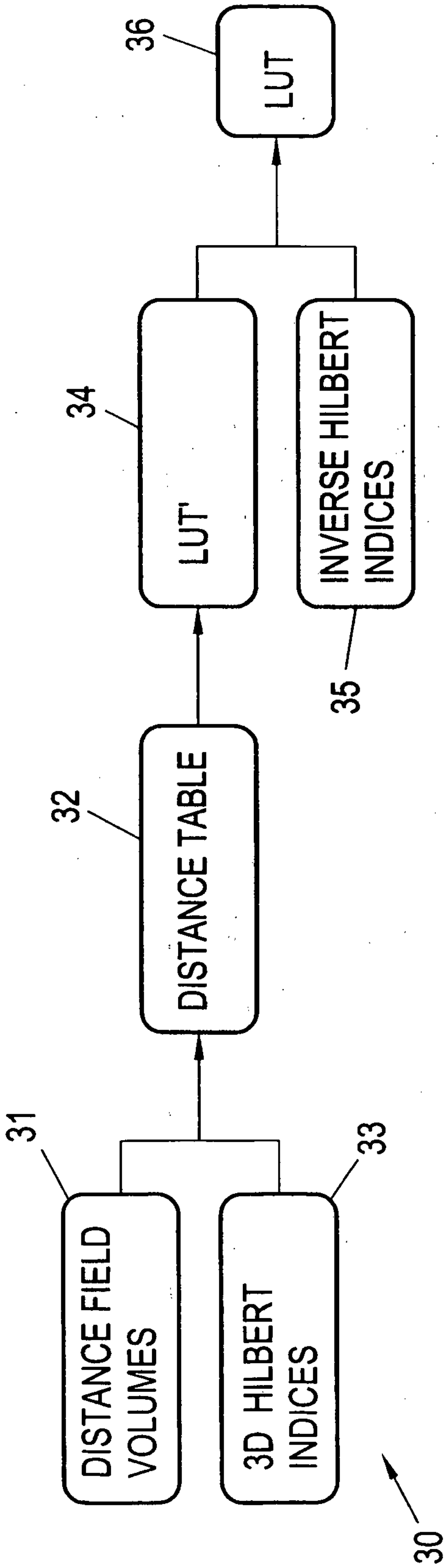
DISTANCE FIELD VOLUMES
3D HILBERT INDICES
DISTANCE TABLE
LUT'
INVERSE HILBERT INDICES
LUT
30
31
32
33
34
35
36

Fig. 11

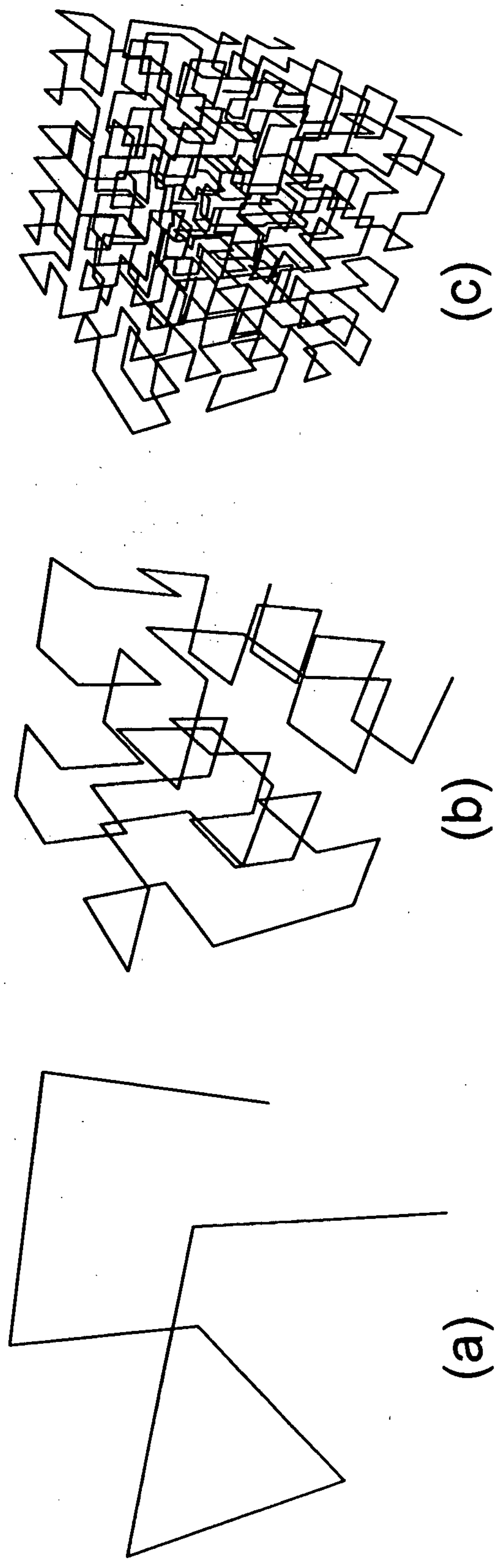
(a)
(b)
(c)

Fig. 12

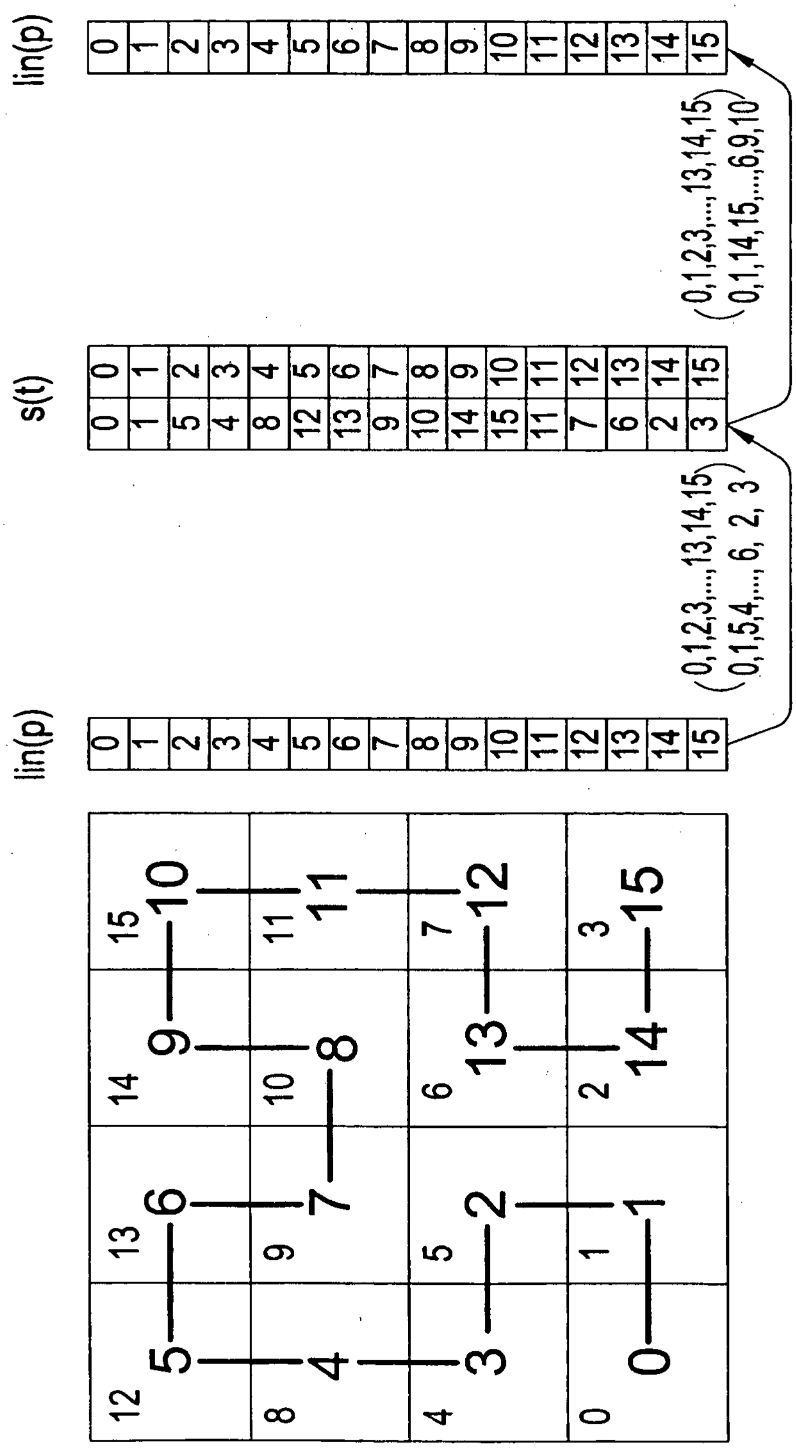


Fig. 13

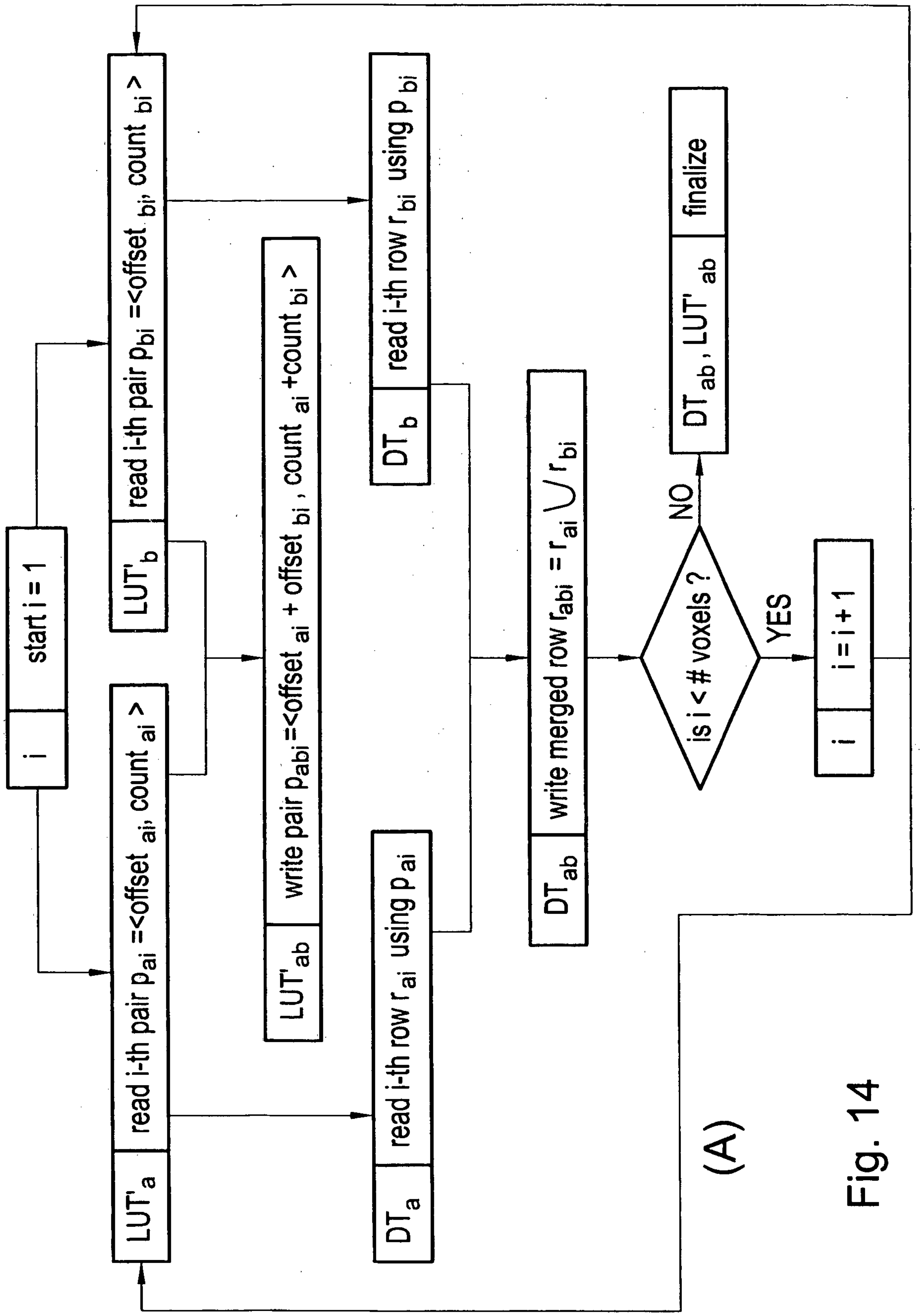
i
start i = 1
LUT'a
read i-th pair $p_{ai}$ =<offset $_{ai}$, count $_{ai}$ >
LUT'b
read i-th pair $p_{bi}$ =<offset $_{bi}$, count $_{bi}$ >
LUT'ab
write pair $p_{abi}$=<offset $_{ai}$ + offset $_{bi}$ , count $_{ai}$ +count $_{bi}$ >
DT$_a$
read i-th row $r_{ai}$ using $p_{ai}$
DT$_b$
read i-th row $r_{bi}$ using $p_{bi}$
DT$_{ab}$
write merged row $r_{abi}$ = $r_{ai} \cup r_{bi}$
is i < # voxels ?
NO
YES
DT$_{ab}$, LUT'$_{ab}$
finalize
i
i = i + 1
(A)

Fig. 14

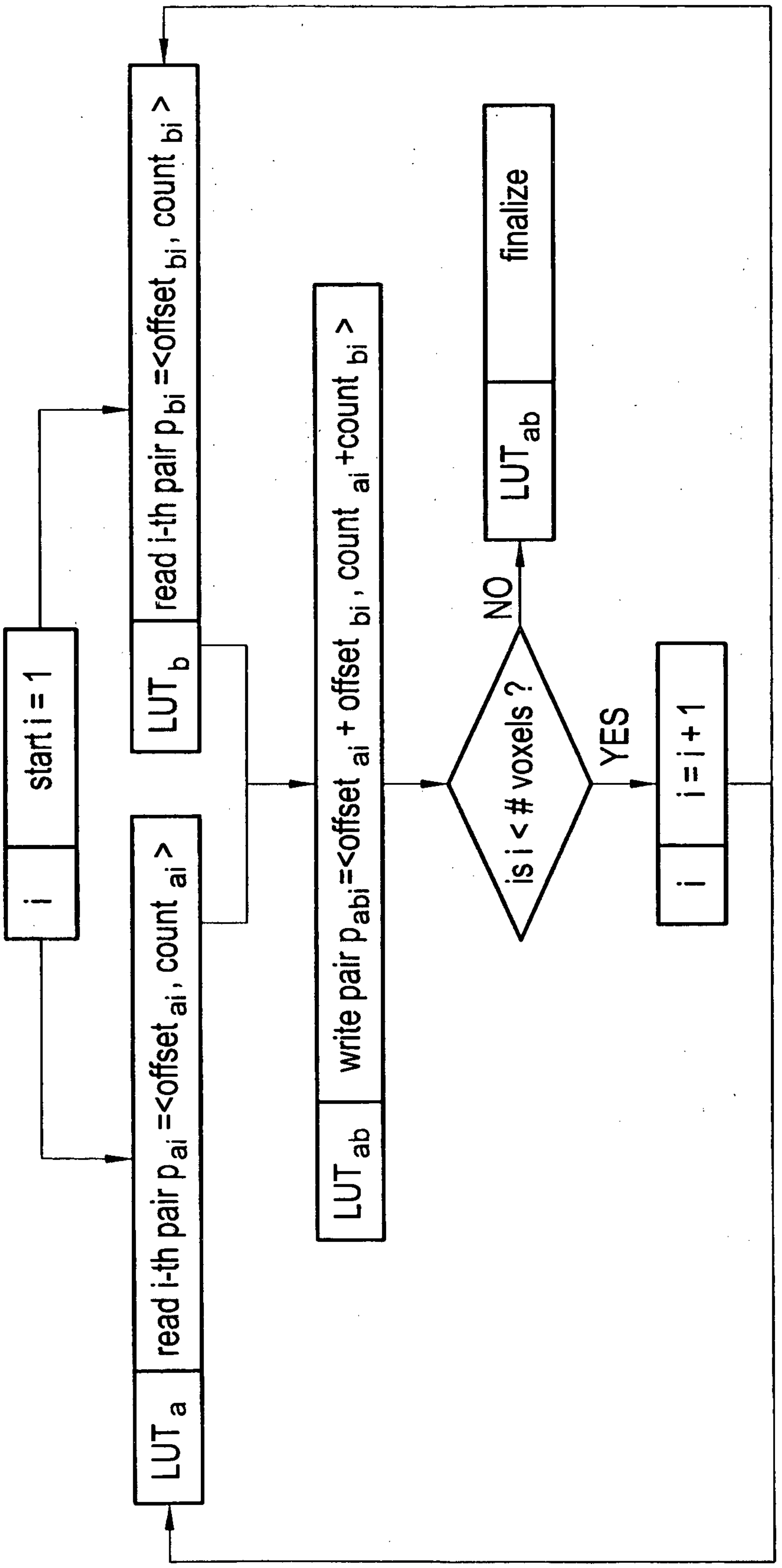
i
start i = 1
LUT a
read i-th pair p ai =<offset ai , count ai >
LUT b
read i-th pair p bi =<offset bi , count bi >
LUT ab
write pair p abi=<offset ai + offset bi , count ai +count bi >
is i < # voxels ?
YES
NO
i
i = i + 1
LUT ab
finalize

(B)

Fig. 14

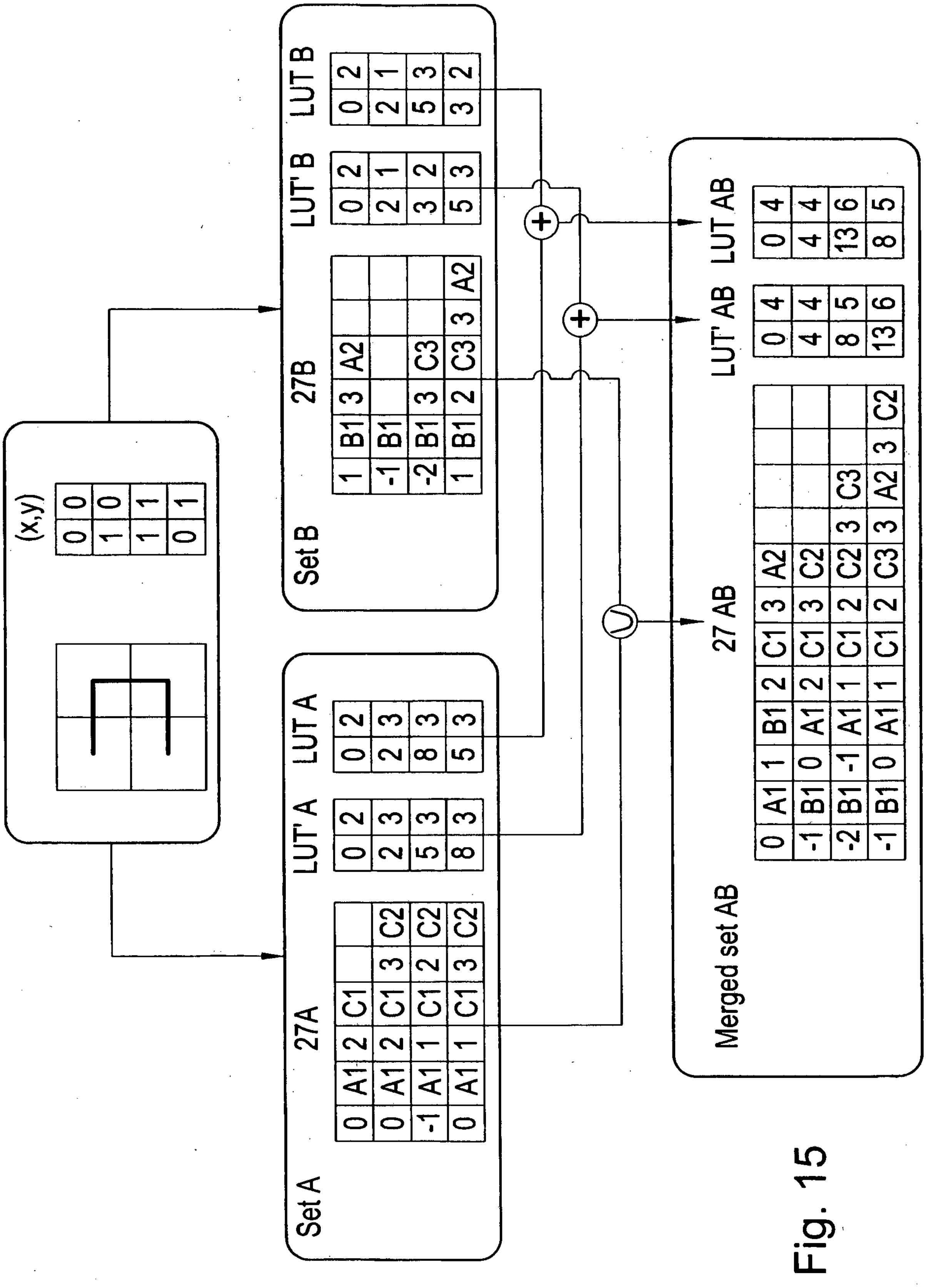
(x,y)
Set A
27A
LUT' A
LUT A
Set B
27B
LUT' B
LUT B
Merged set AB
27 AB
LUT' AB
LUT AB

Fig. 15

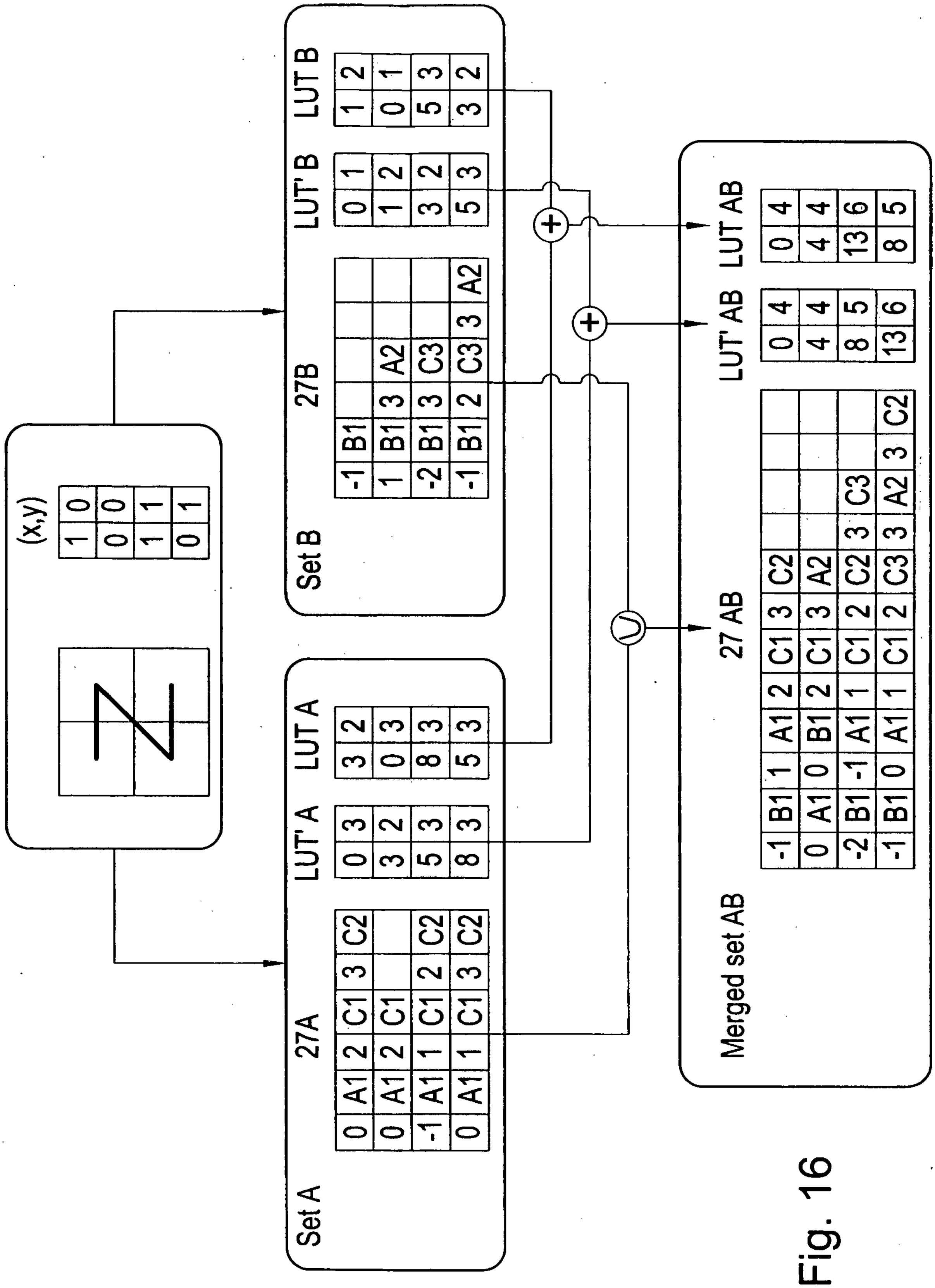
(x,y)
Set A
27A
LUT' A
LUT A
Set B
27B
LUT' B
LUT B
Merged set AB
27 AB
LUT' AB
LUT AB

Fig. 16

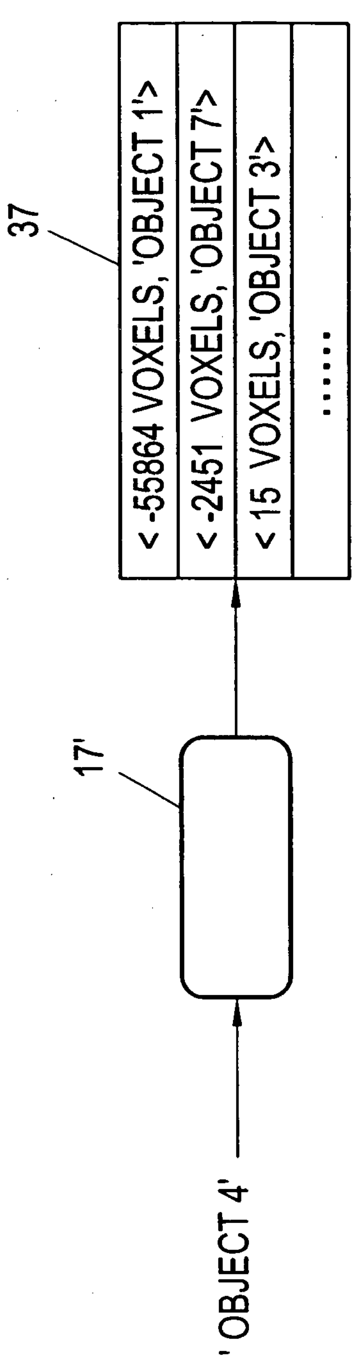
' OBJECT 4'
17'
37
< -55864 VOXELS, 'OBJECT 1'>
< -2451 VOXELS, 'OBJECT 7'>
< 15 VOXELS, 'OBJECT 3'>
.......

Fig. 17

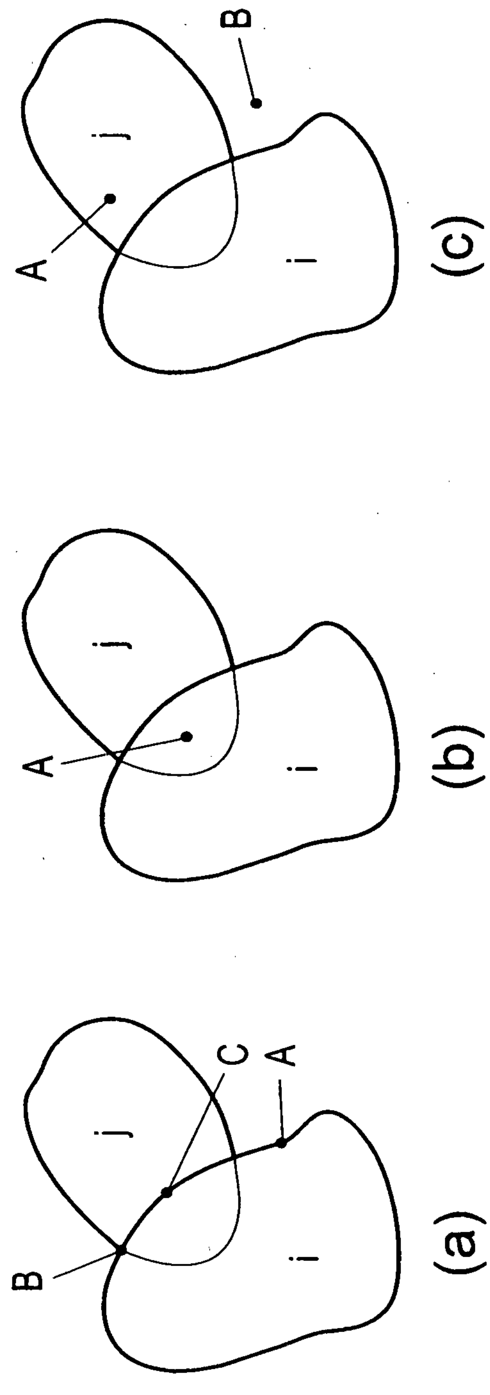
B
C
A
j
i
(a)
A
j
i
(b)
A
B
j
i
(c)

Fig. 18

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description


- WO 9838561 A


### Non-patent literature cited in the description


- The Alps at your fingertips: virtual reality and geoinformation systems. **PAJAROLA R et al.** DATA ENGINEERING, 1998. PROCEEDINGS., 14TH INTERNATIONAL CONFERENCE ON ORLANDO, FL, USA. IEEE COMPUT. SOC, US, 23 February 1998, 550-557
- **MAYE.** Visualization, reconstruction, and integration of neuronal structures in digital brain atlases. *International Journal of Neuroscience,* 2006, vol. 116 (4), 431-459
- **GAEDE et al.** Multidimensional access methods. *ACM Computing Surveys,* 1998, vol. 30 (2), 170-231
- **DONALD HEARN ; M. PAULINE BAKER.** Computer Graphics with OpenGL. Prentice Hall, 2004
- **PRZEMYSLAW PRUSINKIEWICZ ; ARISTID LINDENMAYER.** The Algorithmic Beauty of Plants. Springer-Verlag, 1990
- **W. J. GILBERT et al.** A cube-filling hilbert curve. *The Mathematical Intelligencer,* 1984, vol. 6 (3), 78
- **A. SHERBONDY et al.** Exploring connectivity of the brain's white matter with dynamic queries. *IEEE Transactions on Visualization and Computer Graphics,* 2005, vol. 11 (9), 419-930
- **O'CONOR et al.** 3D visualisation of confocal flouresence microscopy data. *Proceedings of EUROGRAPHICS,* 2004, 49-54
- **WANG et al.** Gpu-based visualization techniques for 3D microscopic imaging data. *Proceedings SPIE,* 2007, 64981H
- **LEEUW et al.** Visualization and analysis of large data collections: A case study applied to confocal microscopy data. *IEEE Transactions on Visualization and Computer Graphics,* 2006, vol. 12 (5), 1251-1258
- **BRUCKNER et al.** An interactive system for direct volume illustration. *Proceedings of IEEE Visualization,* 2005, 671-678
- **BRUCKNER et al.** Instant volume visualization using maximum intensity difference accumulation. *Computer Graphics Forum,* 2009, vol. 28 (3
- **KNISS et al.** Gaussian transfer functions for multi-field volume visualization. *Proceedings of IEEE,* 2003, 497-504